# EUROPÄISCHE PATENTSCHRIFT

(11) **EP 2 039 079 B1**
(45) Veröffentlichungstag und Bekanntmachung des Hinweises auf die Patenterteilung: **15.12.2010**
(21) Anmeldenummer: 07787136.6
(22) Anmeldetag: 05.07.2007
(51) Int. Cl.: H04W 28/18

(54) **KOMMUNIKATIONSSYSTEM UND -VERFAHREN ZUR DATENKOMMUNIKATION**
COMMUNICATION SYSTEM AND COMMUNICATION METHOD FOR DATA COMMUNICATION
SYSTÈME ET PROCÉDÉ DE COMMUNICATION POUR LA COMMUNICATION DE DONNÉES

(30) Priorität: 12.07.2006 DE 102006032246
(43) Veröffentlichungstag der Anmeldung: 25.03.2009
(73) Patentinhaber: Palm, Inc., Sunnyvale, CA 94085-2801 (US)
(72) Erfinder: SCHOEFLER, Thorsten, 87600 Kaufbeuren (DE); ANANTAVRASILP, Isara, 81377 München (DE)
(74) Vertreter: Samson & Partner
(86) Internationale Anmeldenummer: PCT/EP2007/056849
(87) Internationale Veröffentlichungsnummer: WO 2008/006773

(56) Entgegenhaltungen:
- EP-A- 1 225 785
- US-A1- 2003 189 935
- US-A1- 2005 149 628

## Beschreibung

Die vorliegende Erfindung betrifft ein Kommunikationssystem zur Datenkommunikation über wenigstens ein verfügbares Kommunikationsnetz, wobei das Kommunikationssystem wenigstens eine Kommunikationsschnittstelle, über die der Datenkommunikation zugrunde liegende Sendedaten zu einer Gegen-Kommunikationsschnittstelle wenigstens eines zugeordneten Kommunikationsnetzes übertragbar und von der Gegen-Kommunikationsschnittstelle der Datenkommunikation zugrunde liegende Empfangsdaten empfangbar sind, und eine Betriebseinrichtung umfasst, die dafür ausgeführt oder programmiert ist, die Kommunikationsschnittstelle anzusteuern und eine Mehrzahl von Kommunikationsfunktionen auf Basis entsprechender Funktionalitäten der Betriebseinrichtung oder auf Basis vermittels der Betriebseinrichtung betreibbarer Anwendungen bereitzustellen und vermittels der Kommunikationsschnittstelle den Kommunikationsfunktionen jeweils zugeordnete Datenkommunikation über das Kommunikationsnetz oder ein jeweiliges Kommunikationsnetz zu ermöglichen. Die Betriebseinrichtung ist ferner dafür ausgeführt oder programmiert, ersten Kommunikationsfunktionen die Datenkommunikation vermittels der Kommunikationsschnittstelle oder einer von mehreren Kommunikationsschnittstellen gemäß wenigstens einem von der jeweiligen Kommunikationsfunktion vorgegebenen Kommunikationsparameter oder gemäß einer mehrere Kommunikationsparameter beinhaltenden Kommunikationscharakteristik zu ermöglichen und zweiten Kommunikationsfunktionen ohne Kommunikationsparameter- oder Kommunikationscharakteristik-Vorgabe durch die jeweilige Kommunikationsfunktion selbst die Datenkommunikation vermittels der Kommunikationsschnittstelle oder einer von mehreren Kommunikationsschnittstellen gemäß wenigstens einem von der Betriebseinrichtung vorgegebenen Kommunikationsparameter oder gemäß einer von der Betriebseinrichtung vorgegebenen, mehrere Kommunikationsparameter beinhaltenden Kommunikationscharakteristik zu ermöglichen. Dabei wird beispielsweise daran gedacht, dass das Kommunikationssystem in Form eines mobilen Endgeräts, beispielsweise eines Mobilfunk-Teilnehmergeräts, eines Handheld-Computers, eines tragbaren Computers, und dergleichen, ausgeführt ist, welches zur drahtlosen Datenkommunikation über wenigstens einen drahtlosen Kommunikationskanal ausgeführt ist. Das Kommunikationssystem ist aber nicht auf mobile Endgeräte beschränkt, sondern kann auch in Form von stärker ortsgebundenen Endgeräten, wie beispielsweise Arbeitsplatzrechner oder dergleichen, die mit einem Kommunikationsnetz in Verbindung stehen oder bringbar sind, ausgeführt sein. Die erwähnten Endgeräte verfügen in der Regel über wenigstens eine Kommunikationsschnittstelle, beispielsweise eine Funk-Kommunikationsschnittstelle mit zugehöriger Antenne für drahtlose Datenkommunikation (beispielsweise über WLAN, GSM, UMTS und dergleichen) oder/und entsprechende Netzwerkanschlüsse für entsprechende Verkabelungen, beispielsweise LAN, DSL, ISDN und dergleichen. Ferner weisen solche Kommunikationssysteme eine Betriebseinrichtung auf, welche beispielsweise softwaremäßig oder/und hardwaremäßig so eingerichtet ist, dass einerseits das Endgerät an sich betrieben werden kann, also im Sinne eines Betriebssystems, und dass andererseits auf dem Endgerät vorhandene Anwendungen, beispielsweise Internet-Browser, E-Mail-Programme, Multimedia-Programme und dergleichen, vermittels der Betriebseinrichtung mit der Kommunikationsschnittstelle und somit dem Kommunikationsnetzwerk kommunizieren können.

Dabei wird die Datenkommunikation vermittels der Kommunikationsschnittstelle in der Regel von wenigstens einem von der jeweiligen Kommunikationsfunktion vorgegebenen oder von der Betriebseinrichtung vorgegebenen Kommunikationsparameter ermöglicht. Dabei können die Kommunikationsparameter beispielsweise eine Datenkommunikation über einen von mehreren verschiedenen Kommunikationskanälen, wie beispielsweise GSM850, GSM900, GSM1800, GSM1900, UMTS, DECT, WLAN nach wenigstens einem WLAN-Standard, WIMAX oder/und gemäß einer von mehreren Kommunikationsarten, wie beispielsweise einer von mehreren GSM-Modi bzw. UMTS-Modi (etwa Sprachübertragungsmodus, GPRS und HSCSB) vorsehen oder/und es kann sich bei den Kommunikationsparametern beispielsweise um verschiedene Datenübertragungsparameter bzw. Datenübertragungsparametersätze, wie beispielsweise etwa nutzbare Bandbreite/Bitrate, verschiedene QoS-Parameter oder QoS-Klassen, für einen jeweiligen Kommunikationskanal einer Kommunikationsfunktion handeln. In entsprechender Weise können sich die Kommunikationsparameter auf Kommunikationskanäle und Kommunikationsarten der so genannten "4. Generation" und deren Protokolle beziehen, etwa auf eine Datenkommunikation nach der so genannten SDR- (Software Defined Radio) Technologie. Der Einfachheit halber wird im Folgenden ein für die Datenkommunikationen verwendeter Kommunikationskanal und eine dabei verwendete Kommunikationsart jeweils kurz als "Kommunikationsparameter" der betreffenden Datenkommunikation angesprochen.

Der hier angedeutete Aufbau eines solchen Kommunikationssystems wird weiter unten unter Bezugnahme auf die anliegenden Figuren noch genauer beschrieben.

Solche bekannten Kommunikationssysteme weisen den Nachteil auf, dass von einer jeweiligen Kommunikationsfunktion oder von der Betriebseinrichtung vorgegebene Kommunikationsparameter oder Kommunikationscharakteristiken statisch zugeordnet werden, ohne zu berücksichtigen, ob der gewählte Kommunikationsparameter oder die gewählte Kommunikationscharakteristik für die mit der Kommunikationsfunktion aufgebaute Datenkommunikation optimal abgestimmt ist. Beispielsweise kann es vorkommen, dass eine Browser-Anwendung eines mobilen Endgeräts standardmäßig nur eine Netzwerkverbindung mit mittlerer Bandbreite anfordert, welche zum Herunterladen und Lesen von hauptsächlich Text enthaltenden Informationsseiten im Internet optimiert ist. Wenn nun mit dieser gleichen Browser-Anwendung ein Video angeschaut werden soll, reicht die der Browser-Anwendung standardmäßig und statisch zugewiesene Netzwerkverbindung mit mittlerer Bandbreite nicht aus, so dass das Herunterladen und Anschauen eines Videos erschwert oder gar nicht möglich ist. Nach älteren Technologien des Stands der Technik erfolgt ggf. sogar nur ein statisches Routing gemäß einer Routing-Tabelle, bei dem allenfalls eine von mehreren verschiedenen Kommunikationsschnittstellen der betreffenden Kommunikationsfunktion zugeordnet wird.

Aufgrund der statischen Auswahl einer Netzwerkverbindung mit mittlerer Bandbreite als Standard für eine Browser-Anwendung im betrachteten Beispielsfall werden also im Prinzip zu wenig Netzwerkressourcen angefordert bzw. freigegeben, um den Empfang eines Video-Streamings, welcher durch die Browser-Anwendung grundsätzlich ermöglicht ist, optimal zu unterstützen. Gegenüber einem einfachen Herabladen (Download) eines Videos, welches erst später angeschaucht wird, sind solche Video-Streamings hinsichtlich der benötigten Netzwerkressourcen und auch Endgerätressourcen besonders anspruchsvoll, da Echtzeitanforderungen bestehen.

Eine solche statische Zuordnung weist ferner auch den Nachteil auf, dass Netzwerkressourcen unnötigerweise für die Browser-Anwendung reserviert werden, beispielsweise dann, wenn mit der Browser-Anwendung ein Ticker abgefragt werden soll, der gewünschte Zahlenwerte (beispielsweise Börsenkurse, Sportresultate oder dergleichen) anzeigen soll. Bei einer solchen Tickeranwendung ist die statische Auswahl der oben erwähnten Netzwerkverbindung mit mittlerer Bandbreite nachteilig, weil die für die Browser-Anwendung durchschnittliche Bandbreite für eine solche Tickeranwendung viel zu groß ist. Dies führt dazu, dass einerseits im Netzwerk Bandbreiten reserviert werden, welche von der Tickeranwendung nicht ausgenützt werden, und andererseits, dass das mobile Endgerät eine Verbindungsart bzw. einen Verbindungskanal wählt, der für die Tickeranwendung eine zu große Bandbreite aufweist und daher auch für den Anwender teurer ist.

Eine gewisse Verbesserung wird hier durch die Einführung von so genannten

QoS-Klassen und -Parametern erreicht. Unter "QoS" wird dabei die Dienstgüte ("Quality of Service") verstanden, welche zwischen einer clientseitigen Anwendung bzw. Funktionalität und einer über das Netz aufgerufenen Gegenstelle, etwa Server, in Bezug auf Eigenschaften der Kommunikationsverbindung bestimmt und bestmöglich eingehalten wird. Als QoS-Anwendungen (auch als "QoS-aware-Anwendungen" bekannt) werden in diesem Zusammenhang Anwendungen bezeichnet, bei denen entsprechend der bekannten QoS-Modelle entweder eine explizite Reservation von Netzwerkressourcen auf dem gesamten Weg zwischen einem Client und einem Server erfolgt oder bei denen jedem zu übertragenden Datenpaket ein Dienstklasseetikett bzw. -label hinzugefügt wird, entsprechend dem das Datenpaket im Netz von den verschiedenen Geräten (z.B. Routern und dgl.) behandelt wird. Wenn ein Paket beispielsweise ein Label aufweist, das größere Geschwindigkeit anzeigt, so wird dieses Paket von einem Router bevorzugt behandelt. Somit soll sichergestellt werden, dass einer Anwendung eines Clients über den gesamten Verbindungsweg bis zum aufgerufenen Server eine Datenkommunikation ermöglicht wird, welche eine auf QoS-Parametern basierende QoS-Klasse der Anwendung erfüllt.

Derzeit verfügbare, Netzwerkverbindungen nutzende Anwendungen sind noch mehrheitlich Nicht-QoS-Anwendungen ("non-QoS-aware-Anwendungen"), das heißt, sie weisen keine entsprechenden Dienstklasselabel auf bzw. für sie wird keine Verfügbarkeitsprüfung einer eine QoS-Klasse erfüllenden Verbindung durchgeführt. Einer solchen Nicht-QoS-Anwendung kann durch das Betriebssystem statisch eine QoS-Klasse zugewiesen werden. Nicht-QoS-Anwendungen werden somit bei einer Kommunikation über ein Netz in der Regel abhängig von den im Netz durchlaufenen Geräten und deren (Standard-)Einstellungen behandelt. Dies führt - wie bereits weiter oben angedeutet - dazu, dass Netzressourcen nicht optimal genutzt werden, weil Anwendungen statisch Netzressourcen zugewiesen werden, ohne zu berücksichtigen, ob diese Zuweisung zur Anwendung an sich bzw. zum aktuellen Datenfluss dieser Anwendung passt.

US 2005/149 628 A1 betrifft die Vernetzung in Haushalten (Home-LAN) und insbesondere Verfahren zur Bereitstellung von QoS-Dienstqualität für ein Home-LAN-Gerät, das nicht QoS fähig ist. Es ist ein Kommunikationssystem offenbart, dem von einer jeweiligen Kommunikationsfunktion oder von der Betriebseinrichtung vorgegebene Kommunikationsparameter oder Kommunikationscharakteristiken statisch zugeordnet werden, ohne zu berücksichtigen, ob der gewählte Kommunikationsparameter oder die gewählte Kommunikationscharakteristik für die mit der Kommunikationsfunktion aufgebaute Datenkommunikation optimal abgestimmt ist.

Aufgabe der Erfindung ist es, einen plattform- und netzwerkunabhängigen Mechanismus bereitzustellen, mit dem die Nutzung von Netzwerkressourcen oder/und von Endgerätressourcen effizienter erfolgen kann.

Zur Lösung dieser Aufgabe schlägt die Erfindung vor, dass die Betriebseinrichtung dafür ausgeführt oder programmiert ist, für erste Kommunikationsfunktionen sich im Zuge der Datenkommunikation ergebende Kommunikationsmerkmale oder Kommunikationsmerkmalssätze zu erfassen und jeweiligen Kommunikationsparametern oder Kommunikationscharakteristiken, die von den Kommunikationsfunktionen vorgegeben sind, zuzuordnen und diese Zuordnungen durch Zuordnungsdaten zu repräsentieren; und dass die Betriebseinrichtung dafür ausgeführt oder programmiert ist, für zweite Kommunikationsfunktionen sich im Zuge der Datenkommunikation ergebende Kommunikationsmerkmale oder Kommunikationsmerkmalssätze zu erfassen und auf Grundlage dieser Kommunikationsmerkmale oder Kommunikationsmerkmalssätze sowie der Zuordnungsdaten diesen zweiten Kommunikationsfunktionen jeweils wenigstens einen Kommunikationsparameter oder eine mehrere Kommunikationsparameter beinhaltende Kommunikationscharakteristik zuzuordnen und die Datenkommunikation vermittels der Kommunikationsschnittstelle oder einer von mehreren Kommunikationsschnittstellen gemäß dem jeweils zugeordneten wenigstens einen Kommunikationsparameter bzw. gemäß der jeweils zugeordneten Kommunikationscharakteristik zu ermöglichen.

Bei einem solchen Kommunikationssystem werden die für erste Kommunikationsfunktionen erfassten Kommunikationsmerkmale oder Kommunikationsmerkmalssätze von den Kommunikationsfunktionen vorgegebenen Kommunikationsparametern oder Kommunikationscharakteristiken zugeordnet, so dass Zuordnungen zwischen Kommunikationsmerkmalen und Kommunikationsparametern möglich sind. Diese Zuordnungen werden dann für zweite Kommunikationsfunktionen verwendet, um bei diesen auf Grundlage von erfassten Kommunikationsmerkmalen bzw. Kommunikationsmerkmalssätzen die Datenkommunikation dahingehend anzupassen, dass die Datenkommunikation gemäß wenigstens einem Kommunikationsparameter bzw. gemäß einer zugeordneten Kommunikationscharakteristik ermöglicht wird, welche(r) auf den für die zweite Kommunikationsfunktionen erfassten Kommunikationsmerkmalen sowie der Zuordnungsdaten basiert. Es ist also für die zweiten Kommunikationsfunktionen möglich, aufgrund von bei den ersten Kommunikationsfunktionen bereitgestellten Zuordnungen geeignete Kommunikationsparameter bzw. eine geeignete Kommunikationscharakteristik vorzusehen. Hierdurch wird es grundsätzlich möglich, die Datenkommunikation unter Bezugnahme auf wenigstens einen Kommunikationsparameter bzw. auf eine jeweils zugeordnete Kommunikationscharakteristik zu optimieren, so dass für die zweiten Kommunikationsfunktionen eine effizientere Nutzung von Netzwerkressourcen oder/und Endgerätressourcen ermöglicht ist.

Als erste Kommunikationsfunktion kann beispielsweise eine 'QoS-Anwendung dienen, anhand derer Kommunikationsmerkmale erfasst werden und einem Kommunikationsparameter bzw. einer Kommunikationscharakteristik zugeordnet werden. Diese Zuordnung kann dann bei einer Datenkommunikation einer zweiten Kommunikationsfunktion, beispielsweise einer Nicht-QoS-Anwendung, verwendet werden, um in Abhängigkeit von den für die Nicht-QoS-Anwendung erfassten Kommunikationsmerkmalen dieser Nicht-QoS-Anwendung einen optimierten Kommunikationsparameter bzw. eine optimierte Kommunikationscharakteristik zuzuordnen.

Weiterbildend wird vorgeschlagen, dass die Betriebseinrichtung dafür ausgeführt oder programmiert ist, die Zuordnung des jeweiligen wenigstens einen Kommunikationsparameters bzw. der jeweiligen Kommunikationscharakteristik zu einer zweiten Kommunikationsfunktion unter Berücksichtigung von Verfügbarkeitsdaten durchzuführen, die momentan verfügbare Kommunikationsressourcen des Kommunikationssystems oder/und des Kommunikationsnetzes oder/und die momentane Verfügbarkeit eines jeweiligen Kommunikationsnetzes von mehreren Kommunikationsnetzen oder/und die momentane Verfügbarkeit eines jeweiligen Kommunikationskanals von mehreren Kommunikationskanälen angeben, vorzugsweise unter Berücksichtigung von wenigstens einem sich gewünschtenfalls auf eine optimierte Nutzung oder/und Eignung von Kommunikationsressourcen beziehenden vorgegebenen Kriterium.

Solche Verfügbarkeitsdaten können beispielsweise Informationen darüber sein, ob sich ein Anwender mit seinem Kommunikationssystem in einer UMTS-Zelle oder in der Nähe eines WLAN-Zugangspunkts befindet, so dass für eine entsprechende Kommunikationsfunktion, etwa E-Mail-Abruf oder Browser-Applikation, einer der beiden möglichen Zugänge zu einem Kommunikationsnetz ausgewählt werden kann. Dabei wird bevorzugt daran gedacht, dass wenigstens ein Kriterium berücksichtigt wird, beispielsweise Standard-Datenübertragungsrate eines Kommunikationskanals wie GSM, UMTS, WLAN und dergleichen, so dass der zweiten Kommunikationsfunktion ein ihren zugeordneten Kommunikationsparametern entsprechender Kommunikationskanal zugeordnet werden kann, um eine optimale Nutzung von Kommunikationsressourcen zu ermöglichen. Beispielsweise könnte ein Börsenticker über den GSM-Kanal laufen, der die geringste Datenübertragungsrate aufweist, wohingegen eine Videoclip-Anwendung über den UMTS-Kanal oder den WLAN-Kanal aufgerufen werden könnte. Es könnten in diesem Zusammenhang auch wirtschaftliche Kriterien, insbesondere Nutzerentgelte für die Datenkommunikationen je nach gewähltem Kommunikationskanal, berücksichtigt werden, die bei Verfügbarkeit eines WLAN-Kanals in der Regel für die Nutzung dieses Kanals sprechen dürften.

Um eine optimierte und sich verändernden Anforderungen anpassbare Zuordnung zu erreichen, ist es besonders bevorzugt, dass die Betriebseinrichtung eine Lerneinrichtung aufweist, die dafür ausgeführt oder programmiert ist, die Zuordnungsdaten nach einem Lernmodell oder Lernalgorithmus auszuwerten und hieraus Klassifizierungsdaten zu generieren, die einem für eine jeweilige zweite Kommunikationsfunktion erfassten wenigstens einen Kommunikationsmerkmal bzw. Kommunikationsmerkmalssatz wenigstens eine(n) durch die Klassifizierungsdaten vorgegebene(n) bestimmte(n) Kommunikationsparameter bzw. Kommunikationscharakteristik zuordnen, ggf. unter Berücksichtigung der Verfügbarkeitsdaten.

Dabei können die Klassifizierungsdaten Klassifizierungsregeln oder/und wenigstens einen Klassifizierungs-Entscheidungsbaum umfassen oder als Klassifizierungsregeln oder Klassifizierungs-Entscheidungsbaum dargestellt werden.

Als Klassifizierungs-Entscheidungsbaum wird beispielsweise an einen durch einen Lernalgorithmus aufgebauten Entscheidungsbaum gedacht, wie sie beispielsweise durch Lernalgorithmen, wie etwa C4.5 oder J4.8, Bayessches Lernen, genetische Algorithmen und dergleichen, erreichbar sind. Dabei kann ein einmal aufgestellter Entscheidungsbaum beim Vorliegen von zusätzlichen Kommunikationsmerkmalen und Zuordnungen ggf. neu berechnet werden, wodurch sich ggf. andere Klassifizierungsdaten ergeben können. Da solche Entscheidungsbäume an jedem Knoten nur eine Entweder/Oder-Entscheidung zulassen, kann ein Entscheidungsbaum, der zu guten Klassifizierungsergebnissen führt, auch in Form von Klassifzierungsregeln implementiert werden, die nicht automatisch durch ein erneutes Aufstellen des Entscheidungsbaums verändert werden. Neben solchen Entscheidungsbäumen ist es aber nicht ausgeschlossen, auch andere Lernmodelle oder Lernalgorithmen, wie beispielsweise neuronale Netze, einzusetzen, um entsprechende Klassifzierungsdaten erhalten zu können.

Es wird weiterbildend vorgeschlagen, dass die Klassifizierungsdaten jeder zweiten Kommunikationsfunktion wenigstens eine(n) durch die Klassifizierungsdaten vorgegebene(n) bestimmte(n) Kommunikationsparameter bzw. Kommunikationscharakteristik eindeutig zuordnen, ggf. unter Berücksichtigung der Verfügbarkeitsdaten.

Ferner kann die Betriebseinrichtung dafür ausgeführt oder programmiert sein, die Klassifizierungsdaten unter Berücksichtigung von wenigstens einem sich vorzugsweise auf eine optimierte Nutzung oder/und Eignung von Kommunikationsressourcen beziehenden vorgegebenen Kriterium zu generieren. Neben technischen Gesichtspunkten können auch wirtschaftliche Gesichtspunkte oder ergonomische oder auf Vorlieben des Benutzers sich beziehende Gesichtspunkte in solchen Kriterien abgebildet sein.

Gemäß einer besonders bevorzugten Weiterbildung ist die Betriebseinrichtung dafür ausgeführt oder programmiert, eine anfängliche Vorgabe wenigstens eines Kommunikationsparameters bzw. einer Kommunikationscharakteristik für eine jeweilige zweite Kommunikationsfunktion durch eine Kommunikationsparameter-Zuordnung bzw. Kommunikationscharakteristik-Zuordnung auf Grundlage der Zuordnungsdaten bzw. der Klassifizierungsdaten abzulösen, und zwar für Folgeaufrufe der betreffenden zweiten Kommunikationsfunktion oder - vorzugsweise - im laufenden Betrieb, wenn die betreffende zweite Kommunikationsfunktion aktiv ist, durch Umstellung der Datenkommunikation auf die Datenkommunikation gemäß dem zugeordneten wenigstens einen Kommunikationsparameter bzw. gemäß der zugeordneten Kommunikationscharakteristik.

Ferner wird vorgeschlagen, dass die Betriebseinrichtung dafür ausgeführt oder programmiert ist, einer jeweiligen zweiten Kommunikationsfunktion, der momentan wenigstens ein Kommunikationsparameter bzw. eine Kommunikationscharakteristik auf Grundlage der Zuordnungsdaten bzw. der Klassifizierungsdaten zugeordnet ist, auf Grundlage geänderter oder ergänzter Zuordnungsdaten bzw. Klassifizierungsdaten oder/und auf Grundlage wenigstens eines zusätzlich oder geändert erfassten Kommunikationsmerkmals oder/und zur Berücksichtigung geänderter Verfügbarkeitsdaten wenigstens einen Kommunikationsparameter bzw. eine Kommunikationscharakteristik neu zuzuordnen, und zwar für Folgeaufrufe der betreffenden zweiten Kommunikationsfunktion oder - vorzugsweise - im laufenden Betrieb, wenn die betreffende zweite Kommunikationsfunktion aktiv ist, durch Umstellung der Datenkommunikation auf die Datenkommunikation gemäß dem neu zugeordneten wenigstens einen Kommunikationsparameter bzw. gemäß der neu zugeordneten Kommunikationscharakteristik.

Eine derartige Ausführung bzw. Programmierung der Betriebseinrichtung ermöglicht es, auf Grundlage der erlernten Zuordnungsdaten bzw. Klassifizierungsdaten eine beispielsweise beim Aufruf der zweiten Kommunikationsfunktion gültige Vorgabe durch eine andere Vorgabe zu ersetzen, sofern diese mit ihrem wenigstens ein Kommunikationsparameter bzw. mit ihrer zugeordneten Kommunikationscharakteristik besser zur aktuellen Datenkommunikation der zweiten Kommunikationsfunktion passt. Diese Anpassung der Vorgabe bzw. einer vorangehend schon erfolgten Zuordnung kann dabei sowohl im laufenden Betrieb erfolgen, beispielsweise wenn eine Browser-Anwendung nach einem mehrstündigen Abrufen von Tickermeldungen einen Videoclip herunterladen und darstellen soll. Selbstverständlich können die Vorgaben bzw. Zuordnungen auch dann angepasst werden, wenn eine zweite Kommunikationsfunktion nach einer gewissen Unterbrechung erneut aktiviert wird.

Dabei ist die Betriebseinrichtung vorzugsweise dafür ausgeführt oder programmiert, geänderte oder ergänzte Zuordnungsdaten nach dem Lernmodell oder Lernalgorithmus auszuwerten und hieraus geänderte oder ergänzte Klassifizierungsdaten zu generieren.

Neben der Klassifizierung und ggf. Anpassung von Kommunikationsparametern für die zweite Kommunikationsfunktion ist es ferner auch möglich, dass die Betriebseinrichtung dafür ausgeführt oder programmiert ist, für erste Kommunikationsfunktionen auf Grundlage für diese erfasster Kommunikationsmerkmale oder Kommunikationsmerkmalssätze sowie der Zuordnungsdaten bzw. Klassifizierungsdaten den durch die jeweilige Kommunikationsfunktion vorgegebenen wenigstens einen Kommunikationsparameter bzw. die durch die jeweilige Kommunikationsfunktion vorgegebene Kommunikationscharakteristik anhand wenigstens eines sich vorzugsweise auf eine optimierte Nutzung oder/und Eignung von Kommunikationsressourcen beziehenden vorgegebenen Kriteriums zu überprüfen und in Abhängigkeit von dieser Überprüfung auf Grundlage der Zuordnungsdaten bzw. Klassifizierungsdaten sowie vorzugsweise der Verfügbarkeitsdaten der ersten Kommunikationsfunktion wenigstens einen Kommunikationsparameter bzw. eine Kommunikationscharakteristik zuzuordnen, ggf. unter Ablösung wenigstens eines durch die jeweilige Kommunikationsfunktion vorgegeben Kommunikationsparameters bzw. der durch die jeweilige Kommunikationsfunktion vorgegebenen Kommunikationscharakteristik, und zwar für Folgeaufrufe der betreffenden ersten Kommunikationsfunktion oder - vorzugsweise - im laufenden Betrieb, wenn die betreffende erste Kommunikationsfunktion aktiv ist, durch Umstellung der Datenkommunikation auf die Datenkommunikation gemäß dem zugeordneten wenigstens einen Kommunikationsparameter bzw. gemäß der zugeordneten Kommunikationscharakteristik.

Es können so in der Regel statische Standard-Vorgaben für eine erste Kommunikationsfunktion, die von der betreffenden Kommunikationsfunktion selbst vorgegeben sind, abgelöst bzw. angepasst werden, so dass auch die ersten Kommunikationsfunktionen für eine effiziente oder in gewisser Hinsicht optimierte Nutzung von Netzwerkressourcen angepasst werden können.

In diesem Zusammenhang ist die Betriebseinrichtung vorzugsweise dafür ausgeführt oder programmiert, erste Kommunikationsfunktionen, die auf Grundlage der Zuordnungsdaten bzw. Klassifizierungsdaten betreffend ihre Kommunikationsmerkmale oder Kommunikationsmerkmalssätze einerseits und dem vorgegebenen wenigstens einen Kommunikationsparameter bzw. der vorgegebenen Kommunikationscharakteristik andererseits nicht dem wenigstens einen vorgegebenen Kriterium entsprechen, als zweite Kommunikationsfunktionen zu behandeln.

Wie bereits oben angedeutet, ist es bevorzugt, dass das Kommunikationssystem in Form eines mobilen Endgeräts, welches zur drahtlosen Datenkommunikation über wenigstens einen drahtlosen Kommunikationskanal ausgeführt ist, vorzugsweise in Form eines Mobilfunk-Teilnehmergeräts, welches in ein Mobilfunksystem einsetzbar ist, ausgeführt ist.

Ferner ist es bevorzugt, dass als Kommunikationsparameter einer von mehreren verschiedenen Kommunikationskanälen, wie beispielsweise GSM 850, GSM 900, GSM 1800, GSM 1900, UMTS, DECT, WLAN nach wenigstens einem WLAN-Standard, WIMAX, TCP/IP oder/und eine von mehreren Kommunikationsarten, wie beispielsweise einer von mehreren GSM-Modi bzw. UMTS-Modi (etwa Sprachübertragungsmodus, GPRS und HSCSD, Voice over IP), für einen jeweiligen Kommunikationskanal oder/und verschiedene Datenübertragungsparameter bzw. Datenübertragungsparametersätze, wie beispielsweise nutzbare Bandbreite/Bitrate, verschiedene QoS-Parameter oder QoS-Klassen, für einen jeweiligen Kommunikationskanal einer ersten bzw. zweiten Kommunikationsfunktion durch die Betriebseinrichtung zuordenbar sind. In entsprechender Weise können Kommunikationskanäle und Kommunikationsarten (insbesondere Protokolle) der so genannten 4. Generation zum Einsatz kommen und entsprechend zugeordnet werden. Es wird in diesem Zusammenhang zum Beispiel an unter dem Stichwort SDR (Software Defined Radio) bekannte Technologien und deren Kommunikationskanäle und Kommunikationsarten, insbesondere Protokolle, gedacht.

Die der Erfindung zugrunde liegende Aufgabe wird ferner gelöst durch ein Kommunikationsverfahren zur Datenkommunikation über wenigstens ein verfügbaren Kommunikationsnetz, unter Nutzung wenigstens einer Kommunikationsschnittstelle eines eine programmierte oder/und hardwaremäßig realisierte Betriebseinrichtung aufweisenden Kommunikationssystems, über die der Datenkommunikation zugrunde liegende Sendedaten zu einer Gegen-Kommunikationsschnittstelle wenigstens eines zugeordneten Kommunikationsnetzes übertragbar und von der Gegen-Kommunikationsschnittstelle der Datenkommunikation zugrunde liegende Empfangsdaten empfangbar sind, wobei das Verfahren die folgenden Schritte umfasst: Vorsehen einer Mehrzahl von Kommunikationsfunktionen auf Basis entsprechender Funktionalitäten der Betriebseinrichtung des Kommunikationssystems oder auf Basis vermittels der Betriebseinrichtung betreibbarer Anwendungen, wobei die Kommunikationsfunktionen vermittels der Kommunikationsschnittstelle jeweils zugeordnete Datenkommunikation über das Kommunikationsnetz oder ein jeweiliges Kommunikationsnetz durchführen können; und Vorsehen, dass erste Kommunikationsfunktionen die Datenkommunikation vermittels der Kommunikationsschnittstelle oder einer von mehreren Kommunikationsschnittstellen gemäß wenigstens einem von der jeweiligen Kommunikationsfunktion vorgegebenen Kommunikationsparameter oder gemäß einer mehrere Kommunikationsparameter beinhaltenden Kommunikationscharakteristik durchführen und zweite Kommunikationsfunktionen ohne Kommunikationsparameter- oder Kommunikationscharakteristik-Vorgabe durch die jeweilige Kommunikationsfunktion selbst die Datenkommunikation vermittels der Kommunikationsschnittstelle oder einer von mehreren Kommunikationsschnittstellen gemäß wenigstens einem anderweitig vorgegebenen Kommunikationsparameter oder gemäß einer anderweitig vorgegebenen, mehrere Kommunikationsparameter beinhaltenden Kommunikationscharakteristik zu ermöglichen.

Dabei ist erfindungsgemäß vorgesehen, dass für erste Kommunikationsfunktionen sich im Zuge der Datenkommunikation ergebende Kommunikationsmerkmale oder Kommunikationsmerkmalssätze erfasst werden und jeweiligen Kommunikationsparametern oder Kommunikationscharakteristiken, die von den Kommunikationsfunktionen vorgegeben sind, zugeordnet werden und diese Zuordnungen durch Zuordnungsdaten repräsentiert werden; und dass für zweite Kommunikationsfunktionen sich im Zuge der Datenkommunikation ergebende Kommunikationsmerkmale oder Kommunikationsmerkmalssätze erfasst werden und auf Grundlage dieser Kommunikationsmerkmale oder Kommunikationsmerkmalssätze sowie der Zuordnungsdaten diesen zweiten Kommunikationsfunktionen jeweils wenigstens ein Kommunikationsparameter oder eine mehrere Kommunikationsparameter beinhaltende Kommunikationscharakteristik zugeordnet werden und die Datenkommunikation vermittels der Kommunikationsschnittstelle oder einer von mehreren Kommunikationsschnittstellen gemäß dem jeweils zugeordneten wenigstens einen Kommunikationsparameter bzw. gemäß der jeweils zugeordneten Kommunikationscharakteristik durchgeführt wird.

Es ergeben sich die vorstehend in Bezug auf das erfindungsgemäße Kommunikationssystem erläuterten Vorteile.

Weiterbildend wird vorgeschlagen, dass die Zuordnung des jeweiligen wenigstens einen Kommunikationsparameters bzw. der jeweiligen Kommunikationscharakteristik zu einer zweiten Kommunikationsfunktion unter Berücksichtigung von Verfügbarkeitsdaten durchgeführt wird, die momentan verfügbare Kommunikationsressourcen des Kommunikationssystems oder/und des Kommunikationsnetzes oder/und die momentane Verfügbarkeit eines jeweiligen Kommunikationsnetzes von mehreren Kommunikationsnetzen oder/und die momentane Verfügbarkeit eines jeweiligen Kommunikationskanals von mehreren Kommunikationskanälen angeben, wobei vorzugsweise wenigstens ein sich gewünschtenfalls auf eine optimierte Nutzung oder/und Eignung von Kommunikationsressourcen beziehendes vorgegebenes Kriterium berücksichtigt wird.

Dabei ist es besonders bevorzugt, dass die Zuordnungsdaten nach einem Lernmodell oder Lernalgorithmus ausgewertet werden und hieraus Klassifizierungsdaten generiert werden, die einem für eine jeweilige zweite Kommunikationsfunktion erfassten wenigstens einen Kommunikationsmerkmal bzw. Kommunikationsmerkmalssatz wenigstens eine(n) durch die Klassifizierungsdaten vorgegebene(n) bestimmte(n) Kommunikationsparameter bzw. Kommunikationscharakteristik zuordnen, ggf. unter Berücksichtigung der Verfügbarkeitsdaten.

Hierzu wird ferner vorgeschlagen, dass die Klassifizierungsdaten in Form von Klassifizierungsregeln oder/und wenigstens einem Klassifizierungs-Entscheidungsbaum dargestellt werden oder darstellbar sind.

Zusätzlich wird vorgeschlagen, dass die Klassifizierungsdaten jeder zweiten Kommunikationsfunktion wenigstens eine(n) durch die Klassifizierungsdaten vorgegebene(n) bestimmte(n) Kommunikationsparameter bzw. Kommunikationscharakteristik eindeutig zuordnen, ggf. unter Berücksichtigung der Verfügbarkeitsdaten.

Ferner wird weiterbildend vorgesehen, dass die Klassifizierungsdaten unter Berücksichtigung von wenigstens einem sich vorzugsweise auf eine optimierte Nutzung oder/und Eignung von Kommunikationsressourcen beziehenden vorgegebenen Kriterium generiert werden.

Ein Kommunikationsverfahren kann ferner eine anfängliche Vorgabe wenigstens eines Kommunikationsparameters bzw. einer Kommunikationscharakteristik für eine jeweilige zweite Kommunikationsfunktion durch eine Vorgabe entsprechend der Zuordnung auf Grundlage der Zuordnungsdaten bzw. der Klassifizierungsdaten abgelöst werden, und zwar für Folgeaufrufe der betreffenden zweiten Kommunikationsfunktion oder - vorzugsweise - im laufenden Betrieb, wenn die betreffende zweite Kommunikationsfunktion aktiv ist, durch Umstellen der Datenkommunikation auf die Datenkommunikation gemäß dem zugeordneten wenigstens einen Kommunikationsparameter bzw. gemäß der zugeordneten Kommunikationscharakteristik.

Weiterbildend wird vorgeschlagen, dass einer jeweiligen zweiten Kommunikationsfunktion, der momentan wenigstens ein Kommunikationsparameter bzw. eine Kommunikationscharakteristik auf Grundlage der Zuordnungsdaten bzw. der Klassifizierungsdaten zugeordnet ist, auf Grundlage geänderter oder ergänzter Zuordnungsdaten bzw. Klassifizierungsdaten oder/und auf Grundlage wenigstens eines zusätzlich oder geändert erfassten Kommunikationsmerkmals oder/und zur Berücksichtigung geänderter Verfügbarkeitsdaten wenigstens ein Kommunikationsparameter bzw. eine Kommunikationscharakteristik neu zugeordnet wird, und zwar für Folgeaufrufe der betreffenden zweiten Kommunikationsfunktion oder - vorzugsweise - im laufenden Betrieb, wenn die betreffende zweite Kommunikationsfunktion aktiv ist, durch Umstellen der Datenkommunikation auf die Datenkommunikation gemäß dem neu zugeordneten wenigstens einen Kommunikationsparameter bzw. gemäß der neu zugeordneten Kommunikationscharakteristik.

Hierbei ist es besonders bevorzugt, dass geänderte oder ergänzte Zuordnungsdaten nach dem Lernmodell oder Lernalgorithmus ausgewertet werden und hieraus geänderte oder ergänzte Klassifizierungsdaten generiert werden.

Ferner ist es möglich, dass für erste Kommunikationsfunktionen auf Grundlage für diese erfasster Kommunikationsmerkmale oder Kommunikationsmerkmalssätze sowie der Zuordnungsdaten bzw. Klassifizierungsdaten der durch die jeweilige Kommunikationsfunktion vorgegebene wenigstens eine Kommunikationsparameter bzw. die durch die jeweilige Kommunikationsfunktion vorgegebene Kommunikationscharakteristik anhand wenigstens eines sich vorzugsweise auf eine optimierte Nutzung oder/und Eignung von Kommunikationsressourcen beziehenden vorgegebenen Kriteriums überprüft wird und dass in Abhängigkeit von dieser Überprüfung auf Grundlage der Zuordnungsdaten bzw. Klassifizierungsdaten sowie vorzugsweise der Verfügbarkeitsdaten der ersten Kommunikationsfunktion wenigstens ein Kommunikationsparameter bzw. eine Kommunikationscharakteristik zugeordnet wird, ggf. unter Ablösung wenigstens eines durch die jeweilige Kommunikationsfunktion vorgegeben Kommunikationsparameters bzw. der durch die jeweilige Kommunikationsfunktion vorgegebenen Kommunikationscharakteristik, und zwar für Folgeaufrufe der betreffenden ersten Kommunikationsfunktion oder - vorzugsweise - im laufenden Betrieb, wenn die betreffende erste Kommunikationsfunktion aktiv ist, durch Umstellen der Datenkommunikation auf die Datenkommunikation gemäß dem zugeordneten wenigstens einen Kommunikationsparameter bzw. gemäß der zugeordneten Kommunikationscharakteristik.

Hierzu wird vorgeschlagen, dass erste Kommunikationsfunktionen, die auf Grundlage der Zuordnungsdaten bzw. Klassifizierungsdaten betreffend ihre Kommunikationsmerkmale oder Kommunikationsmerkmalssätze einerseits und dem vorgegebenen wenigstens einen Kommunikationsparameter bzw. der vorgegebenen Kommunikationscharakteristik andererseits nicht dem wenigstens einen vorgegebenen Kriterium entsprechen, als zweite Kommunikationsfunktionen behandelt werden.

Bevorzugterweise wird das Kommunikationsverfahren in Zusammenhang mit einem Endgerät eingesetzt, welches zur drahtlosen Datenkommunikation über wenigstens einen drahtlosen Kommunikationskanal ausgeführt ist, vorzugsweise in Zusammenhang mit einem Mobilfunk-Teilnehmergerät, welches in einem Mobilfunksystem eingesetzt werden kann.

Schließlich ist es bevorzugt, dass als Kommunikationsparameter einer von mehreren verschiedenen Kommunikationskanälen, wie beispielsweise GSM 850, GSM 900, GSM 1800, GSM 1900, UMTS, DECT, WLAN nach wenigstens einem WLAN-Standard, WIMAX, TCP/IP oder/und eine von mehreren Kommunikationsarten, wie beispielsweise einer von mehreren GSM-Modi bzw. UMTS-Modi (etwa Sprachübertragungsmodus, GPRS und HSCSD, Voice over IP), für einen jeweiligen Kommunikationskanal oder/und verschiedene Datenübertragungsparameter bzw. Datenübertragungsparametersätze, wie beispielsweise etwa nutzbare Bandbreite/Bitrate, verschieden QoS-Parameter oder QoS-Klassen, für einen jeweiligen Kommunikationskanal einer ersten bzw. zweiten Kommunikationsfunktion zugeordnet werden. In entsprechender Weise können Kommunikationskanäle und Kommunikationsarten (insbesondere Protokolle) der so genannten 4. Generation zum Einsatz kommen und entsprechend zugeordnet werden. Es wird in diesem Zusammenhang zum Beispiel an unter dem Stichwort SDR (Software Defined Radio) bekannte Technologien und deren Kommunikationskanäle und Kommunikationsarten, insbesondere Protokolle, gedacht.

Aus den Weiterbildungsvorschlägen für das erfindungsgemäße Kommunikationsverfahren ergeben sich die oben in Zusammenhang mit den Weiterbildungen des erfindungsgemäßen Kommunikationssystems erläuterten Vorteile.

Das zuvor beschriebene Kommunikationssystem und das Kommunikationsverfahren werden nachfolgend unter Bezugnahme auf die anliegenden Figuren anhand einer möglichen, beispielhaften Umsetzung beschrieben.
- Fig.1: zeigt eine schematische Darstellung einer Kommunikationsumge- bung, in der ein erfindungsgemäßes Kommunikationssystem zum Einsatz kommen kann.
- Fig. 2: zeigt eine vereinfachte schematische Übersicht über die beispiel- hafte Konfiguration eines erfindungsgemäßen Kommunikations- systems.
- Fig. 3: ist ein schematisches Diagramm zur Erläuterung der Funktions- weise einer Ausführungsform der Erfindung.
- Fig. 4: zeigt ein Flussdiagramm einer Verbindungsanforderung für erste Kommunikatiönsfunktionen (hier QoS-Anwendungen).
- Fig. 5: zeigt ein Flussdiagramm der Flussüberwachung bzw. Merk- malserfassung und des Lernens bei hergestellter Verbindung für erste Kommunikationsfunktionen (hier QoS-Anwendungen).
- Fig. 6: zeigt ein Flussdiagramm einer Verbindungsanforderung für zweite Kommunikationsfunktionen (hier Nicht-QoS-Anwendungen).
- Fig. 7: zeigt eine Tabelle mit erfassten und gespeicherten Trainingsdaten, anhand derer ein Entscheidungsbaum aufgebaut werden kann.
- Fig. 8: zeigt eine vereinfachtes Beispiel eines anhand der Trainingsdaten der Fig. 7 aufgebauten Entscheidungsbaums.
- Fig. 9: zeigt Graphen zweier Datenflüsse und deren Mittelwerte zur Erläu- terung von daraus extrahierten Merkmalen.
- Fig. 10: ist ein Diagramm, das zur Veranschaulichung der Funktionsweise bevorzugt vorgesehener Sensor-Funktionalitäten für die Erfassung von Datenflussmerkmalen dient.

Die Erfindung soll nachfolgend beispielhaft anhand eines Kommunikationssystems, bei dem es sich bevorzugt um ein mobiles Endgerät handelt, mit einem so genannten "intelligenten Datenflussklassifizierer" erläutert werden.

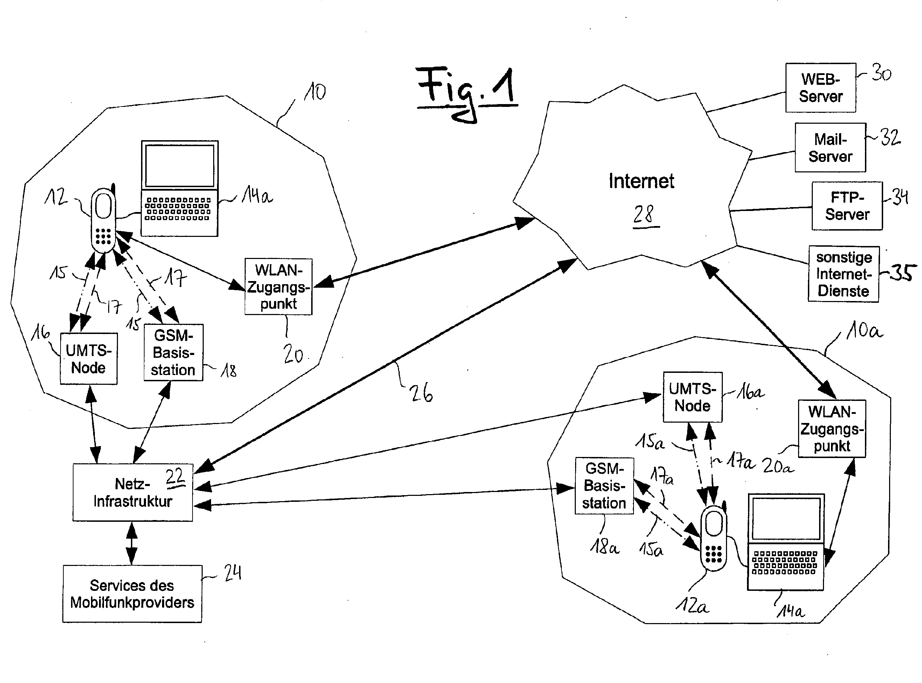

In Fig. 1 sind zwei Mobilfunkzellen 10 und 10a dargestellt, in denen sich jeweils ein Anwender mit seinem Mobilfunktelefon 12, 12a und einem daran angeschlossen tragbaren Computer 14, 14a aufhält. Innerhalb einer jeweiligen Mobilfunkzelle befinden sich ferner jeweils ein UMTS-Node 16, 16a, eine GSM-Basisstation 18, 18a und ein WLAN-Zugangspunkt 20, 20a. Die Zellen 10 und 10a stehen jeweils für eine gesonderte GSM-Zelle, eine gesonderte UMTS-Zelle und einen WLAN-Nutzungsbereich, die in der Regel verschiedene Ausdehnungen haben werden.

Die beiden Mobilfunkgeräte 12, 12a können über verschiedene Kommunikationskanäle 15, 15a, 17, 17a auf ihren jeweiligen UMTS-Node 16, 16a oder auf die GSM-Basisstation 18, 18a zugreifen. Das Mobilfunkgerät 12 weist ferner eine WLAN-Schnittstelle auf, über die es mit dem WLAN-Zugangspunkt 20 eine Verbindung aufnehmen kann. Als Variante hierzu weist in der Zelle 10a der tragbare Computer 14a eine WLAN-Schnittstelle auf und das Mobilfunkgerät 12a dient nur für die UMTS- bzw. GSM-Verbindungen.

Selbstverständlich könnten die hier gesondert dargestellten Mobilfunkgeräte 12, 12a und der jeweils zugehörige Computer 14, 14a auch als Einheiten ausgebildet sein, beispielsweise in Form eines Handheld-Computers mit Mobilfunk-Funktionalität, wie beispielsweise den bekannten Blackberry^{®}-Geräten, so genannte "Pocket PCs" (z.B. mit Windows^{®}-Mobile Betriebssystem), allgemein so genannte "Smart Phones" oder dergleichen. Ferner kann auch eine in den tragbaren Computer eingeführte PCMCIA-Steckkarte oder PC-Card oder dergleichen die Funktion der hier dargestellten Mobilfunkgeräte übernehmen. Ferner ist es ebenso denkbar, dass die Mobilfunkgeräte 12, 12a nicht mit einem tragbaren Computer verbunden sind und entsprechende Anwendungen auf dem Mobilfunkgeräten selbst für den Zugang zu Netzwerkdiensten genutzt werden, z.B. WAP, Location Based Services oder dergleichen.

Die UMTS-Knoten 16, 16a und die GSM-Basisstationen 18, 18a sind mit der Netzinfrastruktur 22 des Mobilfuktbetreibers (Provider) verbunden, über welche beispielsweise Dienste bzw. Services 24 des Mobilfunkproviders aufgerufen werden können. Über diese Infrastruktur werden beispielsweise Sprachkommunikationen oder SMS-Kommunikationen zu anderen Mobilfunkprovidern oder ins Telefonfestnetz übertragen. Die Netzinfrastruktür 22 ist über eine Verbindung 26 vermittels nicht weiter dargestellter Netzwerkressourcen, etwa Switches, Hubs, Router, mit dem Internet 28 verbunden, in dem verschiedene Serverdienste, beispielsweise WEB-Server 30, Mail-Server 32, FTP-Server 34 und dergleichen oder Peer-to-Peer-Dienste (z.B. BitTorrent usw.) oder allgemein andere Internet-Dienste 35 aufgerufen werden können.

Die jeweiligen WLAN-Zugangspunkte 20, 20a stehen ebenfalls über nicht weiter dargestellte Netzwerkressourcen, etwa Switches, Hubs, Router, in direkter Verbindung mit dem Internet 28, ohne dass dafür die Netzinfrastruktur 22 des Mobilfunkbetreibers genutzt wird.

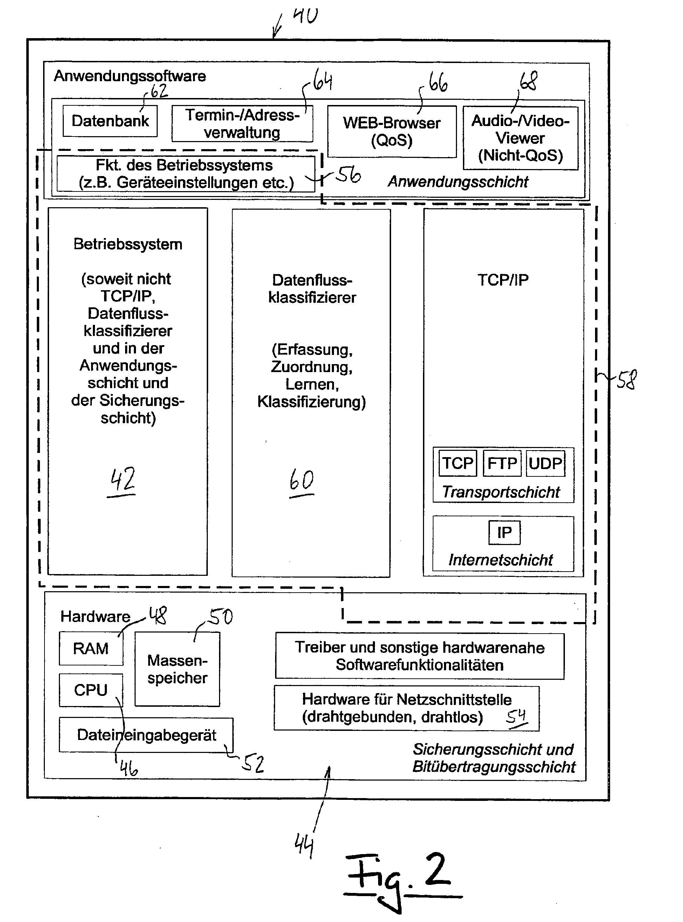

Fig. 2 veranschaulicht einen möglichen softwaremäßigen und hardwaremäßigen Aufbau eines Kommunikationssystems 40. Die softwaremäßige Basis kann im Prinzip ein beliebiges Betriebssystem sein, beispielsweise ein Standard Betriebssystem wie Windows, Unix, Linux usw. bzw. ein für Mobilfunktelefone oder Handheld-Computer angepasstes oder originär zur Verfügung stehendes Betriebssystem (z.B. PalmOS^{®}, Blackberry^{®}, Windows^{®}-Mobile, Symbian^{®} etc.), welches - im Falle der Anwendbarkeit des ISO/OSI-Referenzmodells - einen sich über die Netzwerkschicht, die Transportschicht, die Kommunikationsssteuerungsschicht und die Darstellungsschicht des ISO/OSI-Referenzmodells zwischen der Anwendungsschicht und der Bitübertragungsschicht bzw. Sicherungsschicht erstreckenden Betriebssystemblock 42 bildet. Das Betriebssystem kann ferner auch anwendungsnahe Funktionalitäten 56 in der Anwendungsschicht sowie hardwarenahe Funktionalitäten (insbesondere Treiber) umfassen, die - im Falle der Anwendbarkeit des ISO/OSI-Referenzmodells - der Sicherungsschicht des ISO/OSI-Referenzmodells zugeordnet werden können, sowie gewünschtenfalls einen erfindungsgemäßen Datenflussklassifizierer 60 sowie gewünschtenfalls TCP/IP-Protokolle und -Funktionalitäten, auf denen vorzugsweise die Datenkommunikation beruht. Die unten mit 58 angesprochene Betriebseinrichtung könnte insoweit als Betriebssystem eines erfindungsgemäßen Kommunikationssystems 40 verwirklicht sein. Zweckmäßig kann auch die Hardware-Basis des Systems zu einer solchen Betriebseinrichtung zugerechnet werden. Anzumerken ist, dass die Erfindung nicht auf Implementierungen beschränkt ist, die exakt oder näherungsweise im ISO/OSI-Referenzmodell abbildbar sind. So kann die Erfindung beispielsweise auf Grundlage der ATM-Technologie (Asynchronous Transfer Mode) ausgeführt werden.

Das Betriebssystem kommuniziert mit Hardware 44, zu der in der Regel Komponenten wie CPU 46, RAM 48, Massenspeicher 50, Dateneingabegerät 52 sowie Hardware für die Netzschnittstelle 54 gehören. Dabei kann der in Computern normalerweise als Festplatte ausgebildete Massenspeicher 50 insbesondere bei Mobilfunktelefonen auch als Flash-Speicher oder Mini-Harddisk ausgebildet sein. Die Netzschnittstelle 54 kann drahtgebunden, etwa als Kabelanschlussbuchse für LAN oder Telefonfestnetz, oder drahtlos, etwa als Antenne für WLAN oder Mobilfunknetz, ausgeführt sein. Auf eine detaillierte Beschreibung solcher bekannter Netzschnittstellen wird an dieser Stelle verzichtet. Wie anhand der Fig. 1 erläutert, können mehrere verschiedenartige Netzschnittstellen vorgesehen sein.

Die Kommunikation zwischen der Netzschnittstelle 54 und dem Betriebssystem erfolgt beispielsweise über die bekannten Funktionalitäten der in der Regel zum Betriebssystem zugehörigen TCP/IP-Protokolle. Das Kommunikationssystem 40 weist die hierzu erforderlichen Schichten von TCP/IP auf, welche in kursiver Schrift dargestellt sind. Das Betriebssystem weist häufig auch anwendungsnahe Funktionalitäten 56 auf, welche der Anwendungsschicht zugeordnet werden können, wie beispielsweise Geräteeinstellungen oder dergleichen.

Anzumerken ist, dass zur mit einer gestrichelten Linie umschlossenen Betriebseinrichtung 58 des Kommunikationssystems 40 gemäß Fig. 2 auch hardwaremäßig ausgebildete Funktionalitäten gehören können.

Zu dieser Betriebseinrichtung 58 gehört ferner ein Datenflussklassifizierer 60, der sowohl mit der Betriebssystemschicht, der Anwendungsschicht sowie der Hardware und Software-Funktionalitäten der Bitübertragungsschicht und Sicherungsschicht Daten austauschen kann bzw. Daten aus diesen Schichten erfassen kann sowie mit dem Betriebssystemblock 42 und - direkt oder über den Betriebssystemblock 42 - mit den TCP/IP-Funktionalitäten zusammenwirken kann.

Die Anwendungsschicht umfasst in diesem Beispiel eine Datenbankanwendung 62, eine Termin-/Adressverwaltung 64, einen WEB-Browser 66 und einen Audio-/Video-Viewer 68, wobei die beiden letzteren als QoS-Anwendung bzw. Nicht-QoS-Anwendung ausgebildet sind. Da der nachfolgend vorgestellte Datenflussklassifizierer 60 auf Grundlage von QoS-Anwendungen und Nicht-QoS-Anwendungen erläutert wird, soll die bereits in der Einleitung der Anmeldung angesprochene QoS-Thematik noch etwas genauer erläutert werden.

Derzeit gibt es zwei Haupt-QoS-Modelle, welche in Netzwerk-Standards beschrieben sind: explizite Ressourcenreservation (z.B. lntserv) und differenzierte Verarbeitung (z.B. DiffServ). Netzwerke können dabei beide Modelle gleichzeitig verwenden. Die explizite Ressourcenreservation und die differenzierte Verarbeitung definieren QoS unterschiedlich.

Die unter dem Ressourcenreservations-Modell arbeitenden Einrichtungen müssen mit anderen Einrichtungen im Netz verhandeln, um Netzressourcen entlang dem Pfad von der Verbindungsquelle zum Verbindungsziel zu reservieren. Vorteil des Ressourcenreservations-Modells ist, dass die Anwendungen die für die Verbindungen erforderlichen Ressourcen exakt reservieren können. Die erforderliche QoS ist garantiert, da die Ressourcen für die Verbindung reserviert sind.

Die differenzierte Verarbeitung fügt jedem Paket ein Dienstgüteetiekett bzw. - label hinzu. Wenn dann ein Router entlang des Pfads zum Ziel dieses Label erkennt, wird er das Paket entsprechend verarbeiten (daher differenzierte Verarbeitung). Diejenigen Pakete, welche beispielsweise eine höhere Geschwindigkeit fordern, werden zuerst verarbeitet. Folglich müssen Pakete, welche eine geringere Geschwindigkeit fordern, warten oder werden sogar verworfen. Dieses Modell erfordert keine Verhandlung und weist daher einen geringeren Overhead und geringere Berechnungsleistung der Router entlang des Pfads auf. Die differenzierte Verarbeitung weist allerdings einen Nachteil auf: die Router entlang des Pfades können die Pakete entsprechend der Verfügbarkeit unterschiedlich verarbeiten, weil die Ressourcen nicht explizit spezifiziert sind. Man stelle sich zum Vergleich einen Flugpassagier vor, der ein Erstklassticket gekauft hat; wenn es auf einer Verbindung nur Businessclass-Plätze gibt, erleidet er eine Abwertung obwohl er ein Erstklassticket besitzt. Auch trotz dieses Nachteils ist die Verwendung dieses Modells aber gerechtfertigt, weil die Pakete so gut wie möglich vom Netzwerk verarbeitet werden. Festzuhalten ist noch, dass es zwar unzählige verfügbare Anwendungen auf verschiedenen Plattformen gibt, aber in der Regel nur wenige Typen von Verbindungen benötigt werden.

Die für QoS-Anwendungen verwendeten, bekannten QoS-Parameter, mit denen die Güte einer Datenkommunikation erfasst und festgelegt werden kann, umfassen:
*Maxmimum Transfer Delay bzw. Verzögerung,* welche die Zeit angibt, die ein Datenpaket von Knoten zu Knoten braucht, etwa von einem Client zu einem Server.
*Delay Variation bzw. Jitter,* der die Variabilität der Verzögerungen im Verlauf einer Datenübertragung beschreibt. Die möglichen Jitter-Werte sind nicht beschränkt, sondern geben einen zusammenhängenden Bereich an.
*Bit Error Ratio bzw. Bit-Fehlerrate,* welche die Häufigkeit von Fehlern bei einzelnen Bits angibt. Die möglichen Bit-Fehlerraten-Werte sind nicht beschränkt, sondern geben einen zusammenhängenden Bereich an.
*Data Rate bzw. Datenrate,* welche die Menge von übertragenen Daten zwischen zwei Netzwerkzugangspunkten während einer bestimmten Zeitdauer angibt.

Als QoS-Klassen, welche einer jeweiligen QoS-Anwendung zugewiesen werden können, sind folgende Klassen bekannt:

### Conversational Class:

Verbindungen dieser Klasse sind hauptsächlich Audio-/Video-Verbindungen und können auch Verbindungen von Online-Spielen umfassen. Haupmerkmale dieser Klasse sind geringe Verzögerung und geringer Jitter, wobei einige Fehler tolerierbar sind.

### Interactive Class:

Serverzugangsverbindungen, wie beispielsweise WWW oder E-mail-Abruf. Verzögerung und Jitter sind nicht besonders bedeutsam, aber die Daten müssen korrekt übertragen werden, d.h. diese Klasse ist nicht fehlertolerant.

### Streaming Class:

In diese Klasse gehören hauptsächlich der Bezug von Audio-/Video-Daten, beispielsweise das Streaming in Echtzeit, also das Herunterladen und gleichzeitige unterbrechungsfreie Betrachten eines Musikvideoclips. Ferner umfasst diese Klasse auch Datenübertragungen, bei denen der Server einmalig kontaktiert wird und anschließend eine große, beständige Datenmenge übertragen wird. Solche Audio-/Video- bzw. Datenverbindungen erfordern eine gleichbleibende Verzögerung, also einen geringen Jitter. Bitfehler sind bei Audio- und Videoanwendungen tolerierbar, beim Herunterladen von Daten aber nicht tolerierbar.

### Background Class:

Verbindungen, welche sich selbst an verfügbare Netzressourcen anpassen können und verzögerungstolerant sind. Als Beispiel sei das FTP-Protokoll genannt, das sich selbst an eine verfügbare Bandbreite anpassen kann.

Die oben erwähnten QoS-Klassen werden hauptsächlich basierend auf den QoS-Parametern Verzögerung und Jitter aufgeteilt. Ferner kann man die Klassen noch in fehlertolerant und fehlerintolerant aufteilen und sie mit einem unterschiedlichen Bitfehlergrad behandeln. Obwohl für unterschiedliche Kommunikationsnetze das gleiche Prinzip angewendet werden kann, können explizite Definitionen jeder QoS-Klasse in unterschiedlichen Kommunikationsnetzen variieren.

Da das Internet derzeit Nicht-QoS-aware ist, sind die derzeit verfügbaren Anwendungen fast alle Nicht-QoS-Anwendungen. Diese Anwendungen können auch als Altanwendungen bezeichnet werden. Wenn ein QoS-Netzwerk effizient genutzt werden soll, müssen gegebenenfalls neue Anwendungen geschrieben werden oder bestehende Anwendungen müssen erweitert (Upgrade) werden, damit sie QoS-fähig sind, bevor sie im Netzwerk verwendet werden können. Dies kann unter Umständen nicht oder nur schwierig realisierbar sein. Erfindungsgemäß ist daher vorgesehen, einen Mechanismus bereitzustellen, der den Verbindungen von Altanwendungen geeignete QoS-Klassen zuordnet. Diese Zuordnung, welche gemäß dem Stand der Technik statisch vorprogrammiert sein kann, wird erfindungsgemäß derart ausgeführt, dass eine anpassbare Zuordnung möglich ist, da nie bekannt ist, welche Programme auf einer Einrichtung installiert werden oder unter welchen Netzwerkbedingungen die Einrichtung arbeiten wird. Das Verbindungsverhalten bzw. Verbindungsmerkmale können bei unterschiedlichen Einrichtungen verschieden sein, so dass eine alleinige Verwendung von statischen Klassifizierungsregeln nicht ausreichend effektiv sein kann.

Um es zu ermöglichen, dass einer unbekannten Verbindung oder einem Fluss in einem unbekannten Netzwerk oder einer Netzwerkbedingung eine QoS-Klasse automatisch zugewiesen werden kann, ist das erfindungsgemäße Kommunikationssystem in der Lage, die Beziehung zwischen Flusseigenschaften und der QoS-Klasse selbst zu ermitteln. Das heisst, es ist in der Lage sein Klassifikationen selbst einzuführen bzw. anzupassen.

Um nun eine Verbesserung und Optimierung hinsichtlich der Güte von Datenkommunikationen und der Ausnutzung von Netzressourcen zu ermöglichen, weist das Kommunikationssystem 40 den bereits erwähnten Datenflussklassifizierer bzw. QoS-Manager 60 auf, der in der Regel softwaremäßig umgesetzt ist, und der vermittels verschiedener Module eine Optimierung bei der Zuweisung von QoS-Klassen zu Nicht-QoS-Anwendungen und ggf. auch zu QoS-Anwendungen erlaubt. Der Datenflussklassifizierer 60 ist derart ausgelegt, dass er sowohl mit der Anwendungsschicht bzw. der Anwendungssoftware als auch mit dem Betriebssystem bzw. der Transport-/Internetschicht von TCP/IP kommunizieren kann. Ferner kann der Datenflussklassifizierer 60 ggf. auch auf die Sicherungsschicht bzw. die Bitübertragungsschicht zugreifen, sofern dies in einem Kommunikationssystem erforderlich sein sollte.

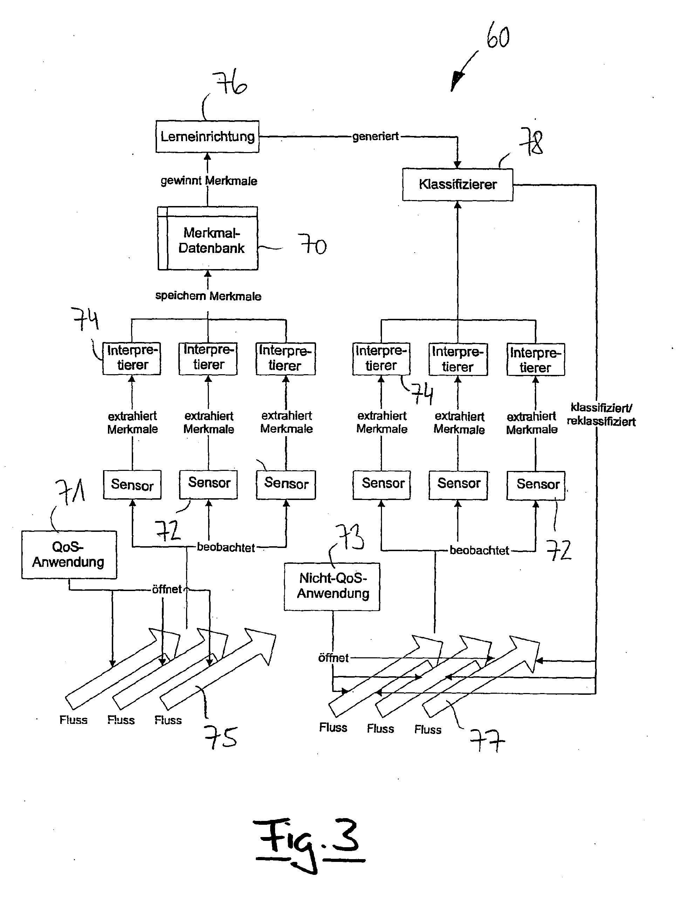

Wie aus der Darstellung gemäß Fig. 2 ersichtlich, handelt es sich beim Datenflussklassifizierer 60 im Prinzip um eine Art Middleware, welche Aktivitäten der Anwendungssoftware im Zusammenhang mit aufgerufenen Netzkommunikationen überwacht und ggf. einen Eingriff vornimmt, wenn dies als notwendig erachtet wird. Wie die Überwachung und das Eingreifen ablaufen, soll nachfolgend unter Bezugnahme auf die Figur 3 beispielhaft näher erläutert werden, wobei hier nur das grundsätzliche Prinzip erläutert wird, ohne auf Implementierungsdetails einzugehen.

Es gibt fünf in der Regel durch entsprechende Software-Funktionalitäten realisierte Module, welche für den gesamten Prozess relevant sind, nämlich eine Lerneinrichtung 76, Sensoren 72, Interpretierer 74, einen Flussklassifizierer 78 sowie Anwendungen 71,73, welche entweder QoS-fähig oder nicht QoS-fähig sind.

Der Datenflussklassifizierer 60 weist eine Datenbank 70 auf, in der durch die Sensoren 72 erfasste und ggf. durch die Interpretierer 74 weiterverarbeitete Merkmale eines jeweiligen, zu einer laufenden Anwendung gehörenden Datenflusses 75 über die von der QoS-Anwendung 71 (erste Kommunikationsfunktion) hergestellte Datenkommunikation gespeichert werden. Dabei können die von den Sensoren 72 erfassten Daten einerseits als unveränderte Rohdaten gespeichert werden oder andererseits nach wenigstens einem Verarbeitungsschritt durch die Interpretierer 74 als verarbeitete Daten gespeichert werden. Hierbei erfolgt eine Zuordnung zwischen den erfassten Merkmalen und der von der QoS-Anwendung 71 verwendeten QoS-Klasse oder/und einem oder mehreren QoS-Parameter.

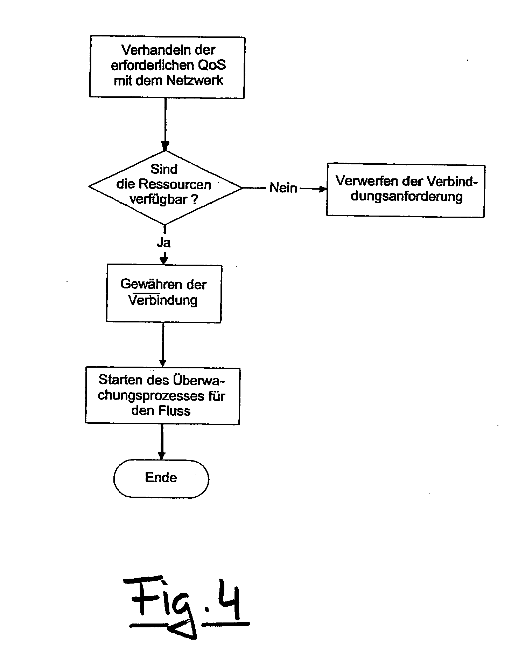

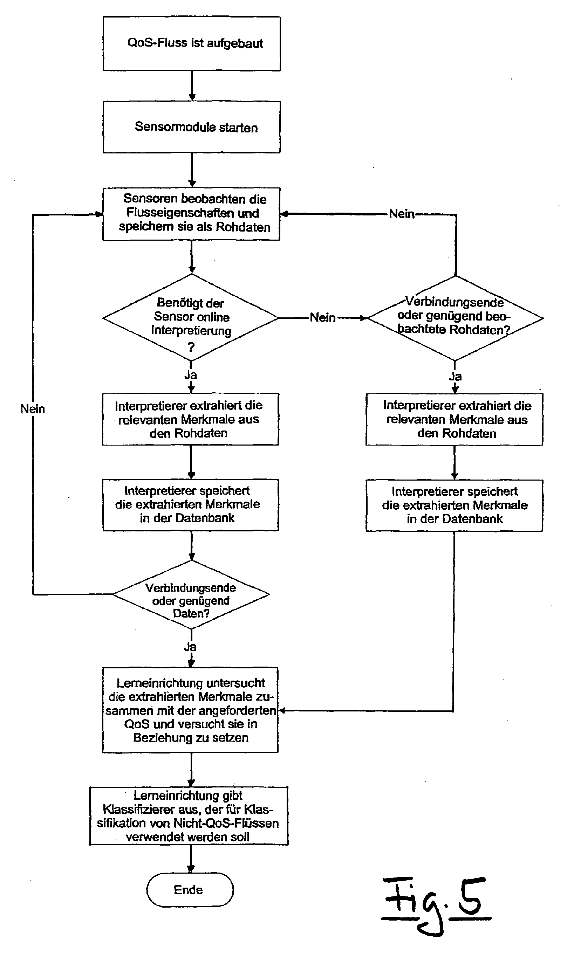

Das Aufrufen einer Netzkommunikation durch eine QoS-Anwendung erfolgt entsprechend den in der Figur 4 dargestellten Schritten. Sofern im Netz genügend Ressourcen vorhanden sind, wird die Verbindung mit den vereinbarten, der QoS-Klasse entsprechenden Kommunikationsparametern freigegeben. Sobald die Netzkommunikation für die QoS-Anwendung 71 etabliert ist, werden die Sensoren 72 von der Betriebseinrichtung 58 bzw. dem Datenflussklassifizierer 60 in geeigneter Weise aktiviert. Sie überwachen dann die Datenkommunikation bzw. den Fluss 75 der QoS-Anwendung 71 und erfassen Merkmale über die Flusseigenschaften, wie dies aus dem Diagramm der Fig. 5 ersichtlich ist. Dabei werden von den Sensoren erfasste Rohdaten von den Interpretieren weiter verarbeitet und in der Datenbank werden die direkt aus den Rohdaten stammenden Merkmale sowie die von den Interpretierern extrahierten Merkmale gespeichert. Sobald genügend Daten vorliegen oder das Ende der Verbindung festgestellt ist, untersucht die Lerneinrichtung die Merkmale zusammen mit den zugehörigen QoS-Klassen und versucht, eine Beziehung zwischen diesen Daten herzustellen. Sobald die Beziehungen feststehen, gibt die Lerneinrichtung einen Klassifizierer 78 (Fig. 3) aus, der dann für die Klassifizierung von Flüssen 77 von Nicht-QoS-Anwendungen verwendet werden soll.

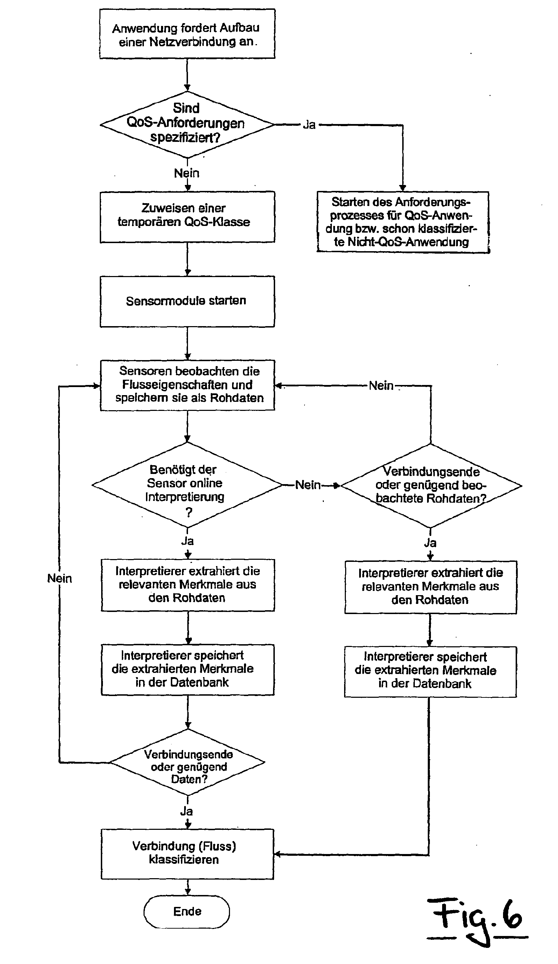

Wenn nun entsprechend den in der Fig. 6 aufgezeigten Schritten eine Anwendung eine Netzkommunikation anfordert, wird zuerst überprüft, ob diese Anwendung eine QoS-Anwendung oder eine Nicht-QoS-Anwendung ist. Falls es sich um eine QoS-Anwendung handelt, werden die bereits oben erwähnten Schritte gemäß den Figuren 4 und 5 durchlaufen. Wenn es sich um die Nicht-QoS-Anwendung 73 (zweite Kommunikationsfunktion) handelt, so ist zu unterscheiden, ob diese zuvor schon einmal eine Netzkommunikation angefordert hat und ihr dann durch den Klassifizierer 78 (Fig. 3) eine passende QoS-Klasse zugewiesen wurde. Ist dies nicht der Fall, so wird dieser Anwendung eine temporäre QoS-Klasse zugewiesen und die Sensoren 72 (Fig. 2) werden aktiviert. Die von den Sensoren erfassten Merkmalsdaten werden als Rohdaten gespeichert und ggf. von den Interpretierern weiter verarbeitet. Aufgrund der erfassten Kommunikationsmerkmale kann nun durch den Klassifizierer 78 (Fig. 3) der Nicht-QoS-Anwendung 73 eine passende QoS-Klasse zugewiesen werden, wobei - wie bereits oben ausgeführt - diese Klassifizierung auf Grundlage von Daten erfolgt, welche der Datenklassifizierer 60 mit seiner Lerneinrichtung 76 gelernt hat.

Handelt es sich bei der eine Netzkommunikation anfordernde Nicht-QoS-Anwendung 73 hingegen um eine Anwendung, die schon mindestens einmal gelaufen ist, so dass auf Grundlage ihrer Anforderungen an die Netzkommunikation und der Zuweisung einer passenden QoS-Klasse durch den Klassifizierer 78 schon eine geeignete, die temporäre QoS-Klasse ablösende QoS-Klasse zugeordnet wurde, so wird diese Nicht-QoS-Anwendung ähnlich wie eine QoS-Anwendung behandelt. Sofern im Netz oder - allgemeiner - im Netz oder/und im Endgerät genügend Ressourcen vorhanden sind, wird die Verbindung mit der zugeordneten QoS-Klasse entsprechenden Kommunikationsparametern freigegeben. Der Ablauf ist dann im Prinzip wie in Fig. 4 veranschaulicht, wobei allerdings das Starten eines Überwachungsprozesses zur Erfassung von Merkmalen über die Flusseigenschaften entbehrlich ist, jedenfalls eine solche Überwachung, die auf ein Lernen der Lerneinrichtung im Hinblick auf die Klassifizierung anderer Anwendungen (Kommunikationsfunktionen) durch den Klassifizierer zielt. Eine Überwachung der Flusseigenschaften im Hinblick auf eine Reklassifizierung auf Grundlage sich ändernder bzw. geänderter Flusseigenschaften ist hingegen sehr zweckmäßig, insbesondere dann, wenn eine Nicht-QoS-Anwendung mutlifunktional ausgeführt ist und Datenflüsse mit stark unterschiedlichen Flusseigenschaften auslösen bzw. benötigen kann. Im Falle einer solchen Auslegung ist Fig. 4 auch hinsichtlich des Startens des Überwachungsprozesses für schon klassifizierte Nicht-QoS-Anwendungen zutreffend.

In diesem Zusammenhang ist darauf hinzuweisen, dass der Datenflussklassifizierer bzw. QoS-Manager 60 die beim Lernen und beim Klassifizieren zu beobachtenden Merkmale unter Verwendung der gleichen Sensoren 72 und Interpretierer 74 erfasst und auswertet, wobei die beobachteten Werte dann aber unterschiedlichen Modulen (Lerneinrichtung 76 bzw. Klassifizierer 78) zugeführt werden zur weiteren Verarbeitung.

Neben der nach einem anfänglichen Aufruf einer Nicht-QoS-Anwendung 73 einmaligen Zuordnung einer QoS-Klasse zu dieser Anwendung, die dann bei Folgeaufrufen sofort der Nicht-QoS-Anwendung zugeordnet werden könnte, ist es auch möglich, die Klassifizierung während des Betriebs, also bei weiterhin mit dem Kommunikationsnetz verbundener Nicht-QoS-Anwendung 73, anzupassen bzw. eine Reklassifizierung durchzuführen, wie schon angesprochen. Dies ist insbesondere dann von Bedeutung, wenn mit einer Nicht-QoS-Anwendung, beispielsweise einem Web-Browser, unterschiedliche Funktionen aufgerufen werden, die unterschiedliche Netzressourcen benötigen.

Eine solche Reklassifizierung ist ferner auch denkbar für QoS-Anwendungen, welche vom Datenflussklassifizierer überwacht werden, so dass einer solchen QoS-Anwendung eine von ihr anfänglich selbst zugewiesene QoS-Klasse gegebenfalls durch eine andere QoS-Klasse, welche vom Klassifizierer bestimmt worden ist, zugewiesen werden kann. Insoweit würde in einem solchen Fall eine QoS-Anwendung (erste Kommunikationsfunktion) wie eine Nicht-QoS-Anwendung (zweite Kommunikationsfunktion) behandelt.

Zur Reklassifizierung sei hier zur Verdeutlichung ein Beispiel angeführt: Ein mobiles Endgerät nutzt einen Nicht-QoS-Web-Browser zum Lesen einer Internetzeitung. Das Durchsuchen (Browsen) einer Internetzeitung erfordert nur eine Netzverbindung geringer Bandbreite. Daher wählt das mobile Endgerät, bei dem der Datenflussklassifizierer implementiert ist, eine Verbindung zu tiefen Kosten, welche gerade ausreicht, um die Internetzeitung durchzusehen. Nach einer gewissen Zeit entscheidet sich der Anwender, mit der Web-Browser-Anwendung einen Videofilm anzuschauen. Dabei ist für die gleiche Anwendung (Web-Browser) nun eine völlig andere QoS-Klasse für Streaming erforderlich. Durch den Datenklassifizierer ist es nun möglich, nach Erfassung der Kommunikationsmerkmale und Klassifizierung für die Web-Browser-Anwendung als Video-Streamer eine Netzverbindung mit höherer Bandbreite auszuwählen, um die Multimediadaten als Stream herunterzuladen, wobei die Anwendung selbst keine explizite Angaben darüber abgibt, dass sie nun als Video-Streamer verwendet werden soll. Diese veränderte Netznutzung derselben Anwendung wird alleine aufgrund der erfassten Kommunikationsmerkmale und der Zuweisung einer zu diesen Kommunikationsmerkmalen zugehörigen QoS-Klasse erreicht.

Von den oben genannten QoS-Parameter, welche in bekannter Weise für die Unterscheidung der QoS-Klassen verwendet werden, können die meisten nicht direkt erfasst werden. Beispielsweise können die Verzögerung eines Pakets oder der Jitter von nur einer Seite der Verbindung nicht gemessen werden, da nicht genau bekannt ist, wann das Paket gesendet worden ist, auch wenn es eine Zeitmarke aufweist, welche bestimmt werden kann. Die von dem Datenklassifizierer bzw. dessen Sensoren 72 (Fig. 3) zu erfassenden Merkmale sind also solche, welche sich direkt auf Grundlage der Netzkommunikation erfassen lassen. Dabei kommen insbesondere Merkmale in Frage, welche nicht den QoS-Parametern entsprechen, aus denen aber trotzdem entsprechende QoS-Klassen abgeleitet und unterschieden werden können.

Die folgende Auswahl stellt exemplarisch einige Merkmale dar, welche direkt erfasst werden können:
*Prozess:* Applikation bzw. Anwendung, zu der ein Datenfluss gehört, wobei das Merkmal Prozess für die Klassifizierung nicht verwendet werden sollte, da eine Anwendung mehrere Verbindungsklassen öffnen kann.
*Transportprotokoll:* Insbesondere TCP oder UDP; dieses Merkmal unterscheidet fehlertolerante Datenflüsse von fehlerintoleranten Flüssen. Da beispielsweise UDP dafür ausgelegt ist, eine höhere Datenübertragungsgeschwindigkeit zu erreichen bei gleichzeitiger Vernachlässigung der Korrektheit der Übertragung, verwenden nur fehlertolerante Anwendungen dieses Protokoll.
*Verbindungszeit:* Die Verbindungszeit zwischen zwei Anschlusspunkten variiert je nach Anwendung. So ist beispielsweise eine Sprachverbindung normalerweise länger als eine Verbindung bei Aufruf einer WWW-Seite im Internet.
*Remote Ports und Lokale Ports:* Ports spielen eine wichtige Rolle bei der Unterscheidung von Diensten. Beispielsweise ist der Port 21 dem FTP-Zugang zugeordnet, wohingegen Port 22 für einen SSH-Zugang vorgesehen ist. Auf die Port-Nummer kann man sich allerdings nicht alleine stützen, da beispielsweise Port 80 (HTTP- oder WWW-Port) für verschiedene Dienste verwendet werden kann, wie beispielsweise WWW oder Datenstreaming.
*Menge von eingehenden*/*abgehenden Daten bzw. Paketen:* Von einigen Verbindungstypen wird vermutet, dass sie pro Verbindung mehr Daten übertragen können als andere, wie beispielsweise dies beispielsweise der Fall ist bei FTP-Verbindungen im Vergleich mit WWW-Verbindungen. Es wird daher vermutet, dass die Datenmenge verwendet werden kann, um gewisse Typen von Diensten von anderen zu unterscheiden, wie beispielsweise interaktive Dienste von Streaming-Diensten. Übertragene Daten können bei eingehenden Daten, ausgehenden Daten oder im Total (eingehende + ausgehende Daten) erfasst werden. Selbstverständlich können auch eingehende und ausgehende Pakete sowie das Total an Paketen erfasst werden.
*Geschwindigkeit von eingehenden*/*ausgehenden Daten bzw. Paketen:* Hierbei handelt es sich um den Durchsatz von Verbindungen, wobei gewisse Verbindungstypen eine konstante Geschwindigkeit und andere eine variable Geschwindigkeit aufweisen. Beispielsweise verwenden Videostreaming-Anwendungen normalerweise Protokolle mit konstanter Bitrate, wohingegen Verbindungen von interaktiven Anwendungen, wie etwa WWW, nicht kontinuierliche (bursty) Bitraten aufweisen. Um zu erfassen, wie die Verbindung ausgestaltet ist, darf man nicht nur die Maximal-, Minimal- oder Durchschnittsgeschwindigkeit erfassen, sondern man sollte die Geschwindigkeitwerte einzeln messen und diese Werte über die Zeit speichern. Dies bedeutet, dass man Signalverarbeitungs-Methoden verwenden kann, um die Daten später zu verarbeiten.

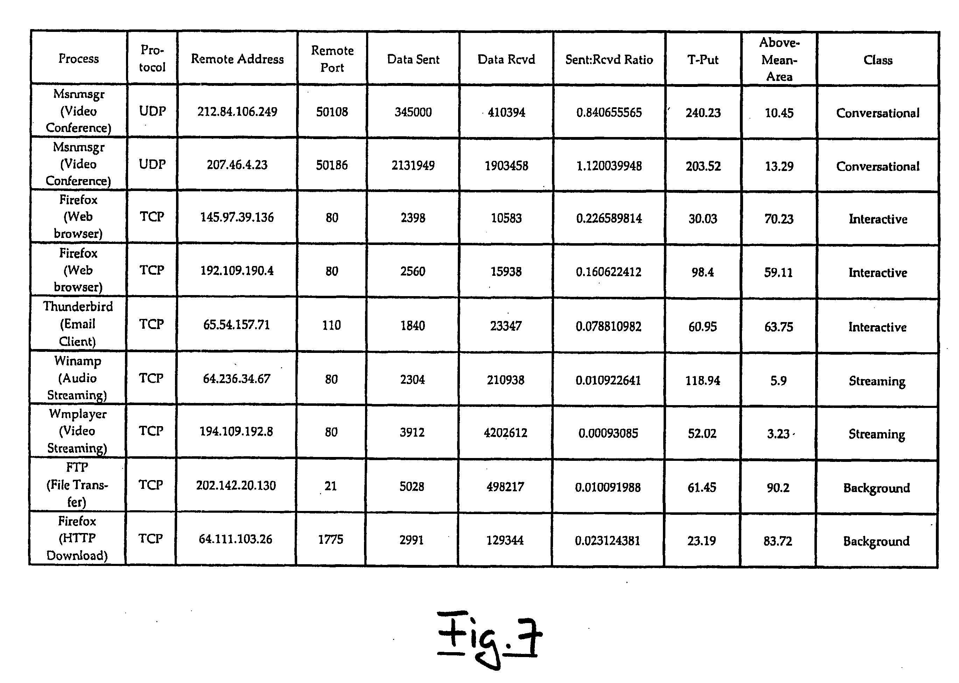

In Figur 7 sind in Zeile 1 der Tabelle weitere Merkmale genannt, wie beispielsweise das "Verhältnis zwischen gesendeten und empfangenen Daten" (Sent:Rcvd Ratio), "Fläche oberhalb des Mittelwerts" (Above-Mean-Area), wobei es sich hierbei um Merkmale handelt, welche durch Berechnung aus den Rohdaten ermittelt werden. In dieser Tabelle ist exemplarisch ein Satz von Trainingsdaten dargestellt, wie er beispielsweise in der Merkmalsdatenbank 70 erfasst sein kann. Diese Daten werden dann als kompletter Datensatz an die Lerneinrichtung 76 (Fig. 3) übergeben, in der vermittels eines Maschinenlernalgorithmus, wie etwa J4.8, ein Entscheidungsbaum aus diesen Daten aufgebaut wird. Grundsätzlich ist anzumerken, dass eine Vielzahl von Merkmalen aus erfassten Rohdaten ableitbar sind. Dabei ist es besonders bevorzugt, wenn solche Merkmale allein oder in Kombination mit wenigstens einem weiteren Merkmal eine zuverlässige Unterscheidbarkeit von QoS-Klassen ermöglichen. Wesentlich bei der Merkmalsauswahl ist, dass diejenigen Merkmale theoretisch oder/und empirisch gefunden werden, mit denen ein möglichst einfacher, aber eine zuverlässige Klassifizierung ermöglichender Entscheidungsbaum aufgebaut werden kann.

Da die erfassten Merkmale nicht unbedingt alleine ausreichen, um die QoS-Klassen zu unterschieden, werden - wie oben für die Fig. 7 bereits angedeutet - mehr Informationen aus den Rohdaten extrahiert (sogenannte Merkmalsextraktion).

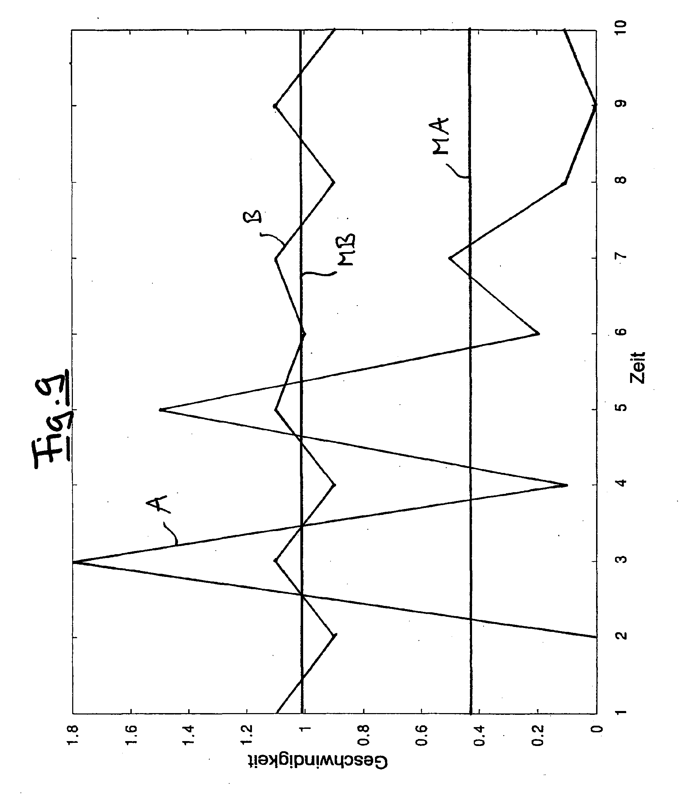

Bei der Merkmalsextraktion können beispielsweise folgende von den Rohdaten abstrahierte Informationen berechnet werden:
*Verhältnis zwischen eingehenden und ausgehenden Daten:* Dies betrifft das Verhältnis zwischen eingehenden und ausgehenden Daten bzw. zwischen eingehenden und ausgehenden Paketen. Diese Merkmale zeigen Unterschiede zwischen eingehenden und ausgehenden Daten, was im Prinzip die Verbindungssymmetrie wiederspiegelt. Die Verbindungssymmetrie ist das Hauptmerkmal, um eine "Conversational" Klasse von anderen zu unterscheiden.
*Energie:* Die Energie ist das Quadrat der Magnitude. Mit der Energie kann die Magnitude eines Impulses verstärkt werden, so dass der Unterschied zwischen geringeren und größeren Magnituden stärker hervorgehoben wird. Wenn beispielsweise die durchschnittliche eingehenden Datenmenge 0,43 Kbps beträgt und der Spitzenwert der eingehenden Daten 1,8 Kbps beträgt, wie dies im Diagramm der Fig. 9 durch die Kurven A und MA dargestellt ist, kann die Differenz zwischen diesen beiden Werten von 1,37 durch Berechnung der Energie wie folgt vergrößert werden: 1,8² - 0,43² = 3,24 - 0,1849 = 3,0551 Kbps

Spitzenwerte können dabei beispielsweise erfasst werden durch Aufsummieren aller Impulswerte, welche oberhalb des Mittelwerts liegen. Anstelle der Beobachtung der Magnitude alleine führt die Beobachtung der Energie zu besser unterscheidbaren Resultaten zwischen kontinuierlichen (nonbursty) und nicht kontinuierlichen (bursty) Verbindungen.

*Fläche über dem Mittelwert:* Dies ist eine alternative Art, um konstante und nicht konstante Verbindungen zu unterscheiden. Wie der Name bereits ausdrückt, ist die Fläche die Summe derjenigen Flächen, welche durch den Mittelwertgraphen und den über dem Mittelwert liegenden Graphabschnitten begrenzt sind. Im Beispiel der Fig. 9 ist die Fläche über dem Mittelwert die Summe der Flächen oberhalb von 0,43, welche von den Graphen A und MA begrenzt werden, wobei es sich hier um ein Beispiel eines nicht konstanten Flusses handelt. Für die Graphen B und MB, welche einen konstanten Fluss darstellen, liegt der Mittelwert bei etwas über 1 und die Fläche über dem Mittelwert ist deutlich geringer als für den nicht konstanten Fluss.

Mit den erwähnten direkt erfassten Merkmalen und den vermittels der Interpretierer extrahierten Merkmalen kann zusammen mit der spezifizierten QoS-Klasse der Lernalgorithmus verwendet werden, um Beziehungen zwischen den Merkmalen und der QoS-Klasse zu finden. Bei diesem Schritt des Maschinenlernens können die Daten in zwei Datensätze aufgeteilt werden: Trainingsdaten und Testdaten. Testdaten in diesem Sinne sind in diesem Zusammenhang vor allem solche Daten, denen auf Grundlage des erfolgten Maschinenlernens Zielwerte zugeordnet werden sollen, beispielsweise eine QoS-Klasse oder sonstige Kommunikationsparameter. Trainingsdaten enthalten dabei sowohl die Merkmale als auch die Zielwerte, welche im vorliegenden Fall die QoS-Klassen (Dienstklassen) sind. Die Testdaten (unbekannte Daten) weisen nur beobachtete Merkmale auf und keinen Zielwert auf. Die Lerneinrichtung muss dann ihr Wissen anwenden, um die Dienstklasse basierend auf den Merkmalen der Testdaten vorherzusagen. Im vorliegenden Fall können die Trainingsdaten durch Beobachten der Merkmale von QoS-Anwendungen zusammen mit ihren QoS-Klassen erhalten werden. Nachdem die Lerneinrichtung die Beziehungen (Zuordnungen) zwischen den Merkmalen und der QoS-Klasse gelernt hat, kann sie dieses Wissen anschließend verwenden, um Testdaten von Nicht-QoS-Anwendungen zu klassifizieren, von denen nur beobachtete Merkmale aber keine beobachtete QoS-Klasse vorliegt.

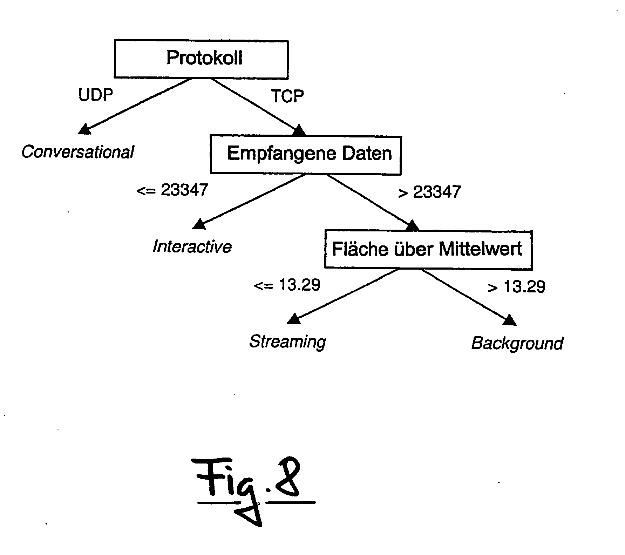

Als Ergebnis des Lernprozesses kann beispielsweise ein Baum aufgebaut werden, wie er auszugsweise in der Fig. 8 dargestellt ist. Dabei werden die einer an einem Knoten des Baums zu erfolgenden Entscheidung zugrunde liegenden Werte bzw. Wertebereiche durch den Lernalgorithmus auf Basis der dem Lernalgorithmus zugeführten erfassten Merkmale ermittelt. Wie bereits erwähnt, kann es sich beim verwendeten Algorithmus um einen J4.8 Algorithmus handeln. Dieser lernt offline, d.h. er lernt nur anhand von allen erfassten Trainingsdaten zusammen und nicht anhand von einzelnen erfassten Merkmalswerten. Wenn also neue Trainingsdaten auftreten, kann die Lerneinrichtung diese nicht unmittelbar erlernen, sondern die neuen Trainingsdaten müssen erst gespeichert werden, damit sie dann zusammen mit bereits vorliegenen Trainingsdaten verarbeitet und gelernt werden können.

Im vorliegenden Beispiel wird beispielsweise am ersten Knoten (Wurzelknoten) entschieden, dass bei Vorliegen des Protokolls UDP, der Nicht-QoS-Anwendung die QoS-Klasse "Conversational" zugeordnet wird. Diese Zuteilung erfolgt ohne die Berücksichtigung weiterer Merkmale. Falls es sich um das TCP-Protokoll handelt, wird am nächsten Knoten überprüft, wie hoch die Menge der empfangenen Daten ist. Beträgt sie weniger oder gleich 23347 (Bytes), wird der Anwendung die QoS-Klasse "Interactive" zugewiesen. Liegt der Wert an empfangenen Daten über der Grenze von 23347 Bytes wird dann noch die Fläche über dem Mittelwert berücksichtigt. Ist diese Fläche kleiner oder gleich 13,29 wird der Anwendung die QoS-Klasse "Streaming" zugewiesen, andernfalls handelt es sich um die QoS-Klasse "Background".

Es ist darauf hinzuweisen, dass sich die in der Figur 8 dargestellten Werte bzw. Wertebereiche bei einer späteren Berechnung des Entscheidungsbaums auf Grundlage von andern bzw. zusätzlich erfassten Daten verändern können. Dabei ist es Ziel solcher Lernalgorithmen, dass auf Basis des aufgebauten Entscheidungsbaum umso zuverlässiger eine Klassifizierung vorgenommen werden kann, je größer die Menge der zum Lernen zur Verfügung stehenden Daten ist.

Auf Grundlage des vorzugsweise verwendeten J4.8 Algorithmus ist einerseits eine offline Lerneinrichtung realisierbar und andererseits ein online Klassifizierer realisierbar. Das heißt, dass nach dem Aufbau des Entscheidungsbaum aus den Trainingsdaten, der Entscheidungsbaum jederzeit verwendet werden kann, um unbekannte Testdaten zu klassifizieren. Bei einer Anwendung, die einen TCP-Fluss auf Port 2000 eines entfernten Hosts öffnet und einen QoS-Manager mit einem in Fig. 8 dargestellten Entscheidungsbaum aufweist, erfasst der QoS-Manager zuerst, dass das Merkmal "Sent:Rcvd Ratio" 0,5 beträgt und weist dem Fluss eine QoS-Klasse "Streaming" zu. Wenn dann nach einiger Zeit der Fluss deutlich mehr eingehende als ausgehende Daten aufweist, ändert sich dieses Verhältnis auf 0,02. Der QoS-Manager, welcher periodische Überprüfungen durchführt, kann dann den Fluss reklassifizieren, so dass eine entsprechende QoS-Klasse zugewiesen wird.

Ferner ist noch anzumerken, dass der Entscheidungsbaum auch auf einfache Weise in einen Satz von Klassifizierungsregeln umgewandelt werden kann, in denen jeder Weg vom Wurzelknoten zu einem Blattknoten ein Regel darstellt. Hier zeigt sich eine vorteilhafte Wirkung eines Lernalgorithmus mit Entscheidungsbaum gegenüber einer Lerneinrichtung mit neuronalen Netzen, bei denen es für einen Anwender/Programmierer recht schwierig sein kann, entsprechende Regeln aus der Netzstruktur abzuleiten und umzusetzen.

Schließlich ist noch darauf hinzuweisen, dass der benötigte Speicherplatz für die erfassten Kommunikationsmerkmale bzw. extrahierten Merkmale keine Einschränkung darstellt, da es sich bei den erfassten und zu speichernden Daten in der Regel Daten handelt, die wenig Speicherplatz benötigen oder zumindest einfach und effizient komprimiert werden können. Somit kann ein oben vorgestellter Datenflussklassifizierer bzw. QoS-Manager auch auf Systemen implementiert werden, welche über beschränkte Speicherkapazitäten verfügen.

Bevorzugt werden nach der Erfindung Sensoren oder Sensor-Funktionalitäten verwendet, um das Verhalten von bzw. Informationen über Datenflüsse zu beobachten. Es wird insbesondere auf die Flüsse 75 und 77 und die Sensoren 72 in Fig. 3 Bezug genommen. Entsprechende "Sensoren" (Sensor-Funktionalitäten oder Sensor-Prozeduren) können sich so einfach darstellen wie die Anforderung von Flussinformationen von dem Betriebssystem über vorgesehene Programmschnittstellen (APls) oder die Beobachtung von Datenpaketen, die aus der Netzwerkstelle kommen bzw. in diese gehen, über Funktionalitäten, die durch das so genannte NAL (Network Abstraction Layer) oder von Protokoll-Stacks geliefert werden. Gemäß einer bevorzugten Implementierung sind die Sensoren an jeder Netzwerkschnittstelle angesiedelt und verwenden eine Paket-Einfang-Funktionalität in der Art des "pcap"-Tools oder eines so genannten Paket-Sniffers, um die durch die Netzwerkschnittstelle durchgehende Pakete zu erfassen. Dieses Erfassen (capturing) wird im Hintergrund durchgeführt ohne direkte Information oder Unterstützung durch die jeweilige Anwendung, die die Netzwerkschnittstelle verwendet. Diese Art der Erfassung funktioniert somit mit jeder auf dem Betriebssystem und der Hardware lauffähigen Anwendung. Für jedes erfasste Paket wird die Sensor-Funktionalität dessen Roh-Merkmale identifizieren und erfassen, wie Quellen- und Zieladresse, Quellen- und Zielport, Paketgröße und dergleichen.

TCP/IP-Datenflüsse unterscheiden sich voneinander durch die Adressen und Ports. Pakete, die zur gleichen Zieladresse und zum gleichen Zielport gerichtet sind und überdies von der gleichen Quellenadresse und dem gleichen Quellenport stammen, gehören zum gleichen Datenfluss. Hieraus folgt, dass mit in dem Paketheader spezifizierten Adressen und Ports die Pakete in zugeordnete (zusammengehörige) Datenflüsse sortiert werden können. Nachdem die zu einem Fluss zugehörigen Pakete erfasst sind, können die Sensor-Funktionalitäten anschließend relevantere Daten berechnen, wie Durchsatz, Datenmenge und Gesamtanzahl übertragener Pakete. Der Durchsatz und die Übertragungsgeschwindigkeit kann durch Messen der Menge an Daten oder Paketen über eine gewisse Zeitdauer berechnet werden, wohingegen die Datenmenge oder Menge an Paketen einfach durch Summieren über die Paketgröße oder die Anzahl von Paketen im Fluss ermittelt werden kann.

Die Information über spezielle QoS-Anforderungen eines bestimmten Datenflusses oder der zu Grunde liegenden Anwendung, zu der der Datenfluss gehört, kann durch andere Sensoren bzw. Sensor-Funktionalitäten erhalten werden, die die entsprechende Information vom Betriebssystem abfragen. Aus den angesprochenen Rohdaten können weitere Informationen ermittelt bzw. berechnet werden, wie Flussenergie usw. Solche Merkmale werden hier als "extrahierte Merkmale" bezeichnet. Solche extrahierten Merkmale sind also jene Merkmale, die durch Verarbeitung aus den Rohdaten ermittelt werden. Solche Merkmale können durch so genannte Interpretierer oder Interpretier-Funktionalitäten berechnet werden. Es wird diesbezüglich auf die Interpretierer 74 in Fig. 3 Bezug genommen. Beispiele solcher Merkmale sind: Verhältnis zwischen der eingehenden und der ausgehenden Datenmenge, Verhältnis zwischen den ankommenden und den auslaufenden Paketen, Energie oder Fläche über dem Mittelwert. Solche durch Interpretieren bzw. weitere Auswertung erhaltene Merkmale beruhen in der Regel auf Daten von mehreren verschiedenen Sensoren bzw. Sensor-Funktionalitäten.

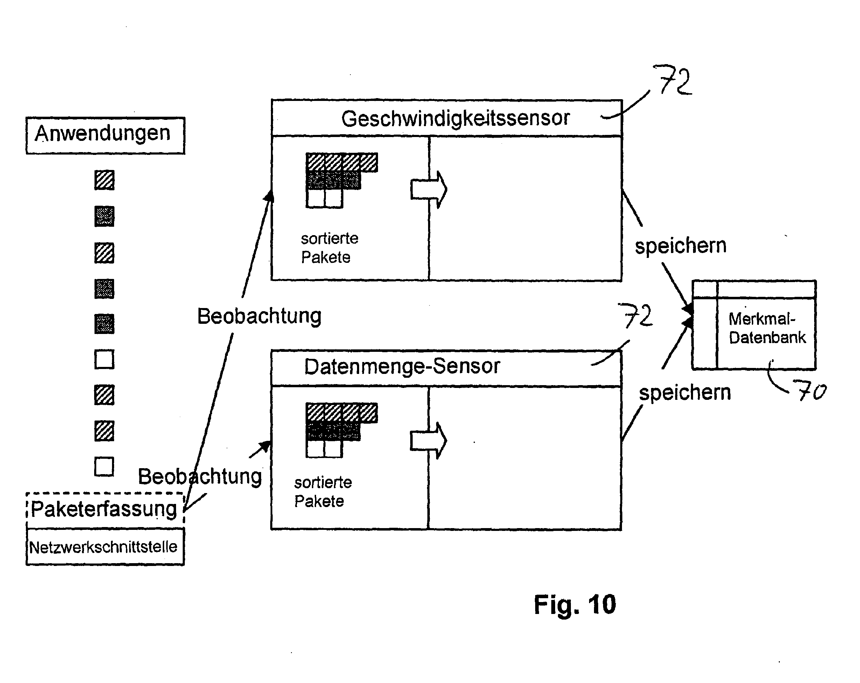

Fig. 10 zeigt eine Veranschaulichung der Arbeitsweise von Sensor-Funktionalitäten der angesprochenen Art, hier eines "Geschwindigkeitssensors" und eines "Datenmengesensors". Es werden die durch Paketerfassung (packet capturing) erfassten Pakete, die zu gewissen Anwendungen gehören, anwendungsweise sortiert und dann hieraus die interessierende Datenübertragungsgeschwindigkeit bzw. die interessierende Datenmenge berechnet und dann die Ergebnisdaten in der Merkmal-Datenbank abgespeichert. Es wird diesbezüglich auf die Merkmal-Datenbank 70 in Fig. 3 Bezug genommen, in der die Ergebnisdaten in der berechneten Rohform oder alternativ nach weiterer Verarbeitung durch einen Interpretierer abgespeichert werden.

Anhand weiterer Beispiele, die nicht als Figur dargestellt sind, sollen die Vorteile und verschiedene Anwendungsmöglichkeiten eines erfindungsgemäßen Datenflussklassifizierers bzw. QoS-Managers nochmals verdeutlicht werden.

### Beispiel 1

Ein mobiles Endgerät ist mit einer älteren Nicht-QoS-Anwendung für einen Börsenticker in einem Web-Browser ausgerüstet. Eine solche Anwendung wird vom Betriebssystem standardmäßig als Web-Browser-Anwendung klassifiziert mit bestimmten QoS-Anforderungen. Das Endgerät ist so konfiguriert, dass Web-Browser-Anwendungen eine Netzverbindung mit hoher Bandbreite auswählen, wie beispielsweise das UMTS-Paketdatennetz. Bei einer solchen Verbindung mit hoher Bandbreite fallen hohe Kosten an und es werden mehr Netzwerkressourcen gebunden. Wenn nun die Klassifizierung der Börsentickeranwendung erfindungsgemäß auf Basis des vorgestellten Datenklassifizierers erfolgt, wird die Anwendung durch Erfassung ihres aktuellen Netzverkehrs als asynchrone Anwendung mit geringer Bandbreite, wie beispielsweise eine Befehlseingabe-Anwendung (z.B. telnet oder dgl.) klassifiziert. Befehlseingabe-Anwendungen werden vom Endgerät normalerweise über eine Verbindung geringer Bandbreite zu tieferen Kosten betrieben. Daher führt die Zuteilung einer anderen QoS-Klasse und somit einer anderen Auswahl der Netzressourcen zu Einsparungen bei den Verbindungskosten für den Anwender und ferner zu kostbaren Einsparungen bei den Netzressourcen gegenüber sonst aufgrund der falschen standardmäßigen Klassifizierung reservierten Netzressourcen. Überdies. kann so durch zweckmäßige Auswahl von Ressourcen des Endgeräts beispielsweise dessen Energieverbrauch und auch der Bedarf an Hardware-Ressourcen und deren Nutzung minimiert bzw. optimiert werden.

### Beispiel 2

Ein Anwender hat eine neue Anwendung auf sein mobiles Endgerät heruntergeladen. Diese Anwendung ist eine Nicht-QoS-Anwendung und der Anwender weiss nichts darüber, welche Dienstklasse oder welche QoS-Anforderungen für die Anwendung erforderlich sind. Ohne die Erfindung würde der neuen Anwendung im Falle eines QoS-Gesamtsystems eine standardmäßige Dienstgüte zugeordnet werden oder die QoS-Anforderungen würden auf Grundlage vordefinierter Regeln, welche für die Anwendung nicht passen, klassifiziert werden. Mit dem vorgestellten System bzw. Verfahren wird nun aber das Verhalten der neuen Anwendung zuerst analysiert und dann wird die Anwendung entsprechend klassifiziert, so dass eine geeignete QoS-Klasse für die Anwendung ausgewählt werden kann.

### Beispiel 3

Ferner ist es mit einem solchen Kommunikationssystem bzw. Datenklassifizierer auch möglich, dass aufgrund der erfassten Merkmale des Datenflusses einer Anwendung ein Verbindungskanal als Kommunikationsparameter, etwa WLAN, UMTS, GSM und dgl., ausgewählt wird, der hinsichtlich beispielsweise eines zusätzlichen Kriteriums wie seiner Bandbreite oder/und hinsichtlich wirtschaftlicher Kriterien (z.B. Verbindungskosten pro Zeiteinheit) für diese Anwendung optimal ist. Die Auswahl und Zuordnung eines insoweit optimalen Kommunikationskanals kann in Abhängigkeit von den momentan insgesamt verfügbaren Kommunikationskanälen erfolgen, so dass beispielsweise ein Video-Download aus dem Internet bei Verfügbarkeit eines WLAN-Accesspoints über die WLAN-Schnittstelle erfolgt oder - wenn ein WLAN-Accesspoint nicht verfügbar ist - über einen anderen, für diesen Zweck möglichst gut geeigneten Kommunikationskanal, etwa über UMTS.

Schließlich ist noch darauf hinzuweisen, dass das hier vorgestellte Kommunikationssystem und -verfahren unabhängig von der Plattform des (mobilen) Endgeräts und dem verwendeten Netz (drahtgebunden, drahtlos) ist. Da die Erfindung zweckmäßig als eine Art Middleware implementierbar ist, die zwischen Betriebssystem bzw. betriebssystemnahen Funktionen und Anwendungen arbeitet, können entsprechende (Programmier-)Schnittstellen vorgesehen werden, welche die Einbindung des Datenfluss-Klassifizierers in unterschiedlichen Geräten mit unterschiedlichen Betriebssystemen ermöglichen.

Mit dem vorgestellten erfindungsgemäßen Kommunikationssystem bzw. - verfahren können folgende Vorteile erreicht werden:

Die Erfindung erhöht die Effizienz beim QoS-Management in einer Einrichtung bzw. einem System, auf dem Altanwendungen installiert sind. Anstelle einer statischen Verwaltung von Altanwendungen durch Vergabe von vordefinierten QoS- bzw. Dienstklassen, kann der QoS-Manager (Datenflussklassifizierer) des Systems geeignete QoS-Klassen zuweisen in Abhängigkeit von beobachteten Verbindungseigenschaften.

Das QoS-Management kann im Hintergrund durchgeführt werden. Das Vorhersagen der QoS-Klasse durch den QoS-Manager benötigt keine Anwenderinteraktion, was zu weniger Komplikationen für den Anwender selbst führt.

Durch die Erfindung wird der Bereich von verfügbaren Anwendungen, welche effektiv auf dem System laufen, erweitert. Dabei profitiert zusätzlich zu neuen QoS-Anwendungen auch ein große Zahl von existierenden Anwendungen von QoS-Plattformen und QoS-Netzwerken. Dies wirkt sich auch positiv auf Entwicklungen in einer Firma aus, da bestehende Anwendungen nicht unbedingt umgeschrieben werden müssen zu QoS-Anwendungen. Vielmehr können Nicht-QoS-Anwendungen einfach auf dem erfindungsgemäßen System unter Nutzung der Vorteile von QoS betrieben werden. Dies führt zu deutlichen Einsparungen bei den Entwicklungskosten.

Ferner ergeben sich durch optimierte Ressourcennutzung Vorteile für den Nutzer eines entsprechenden Endgeräts sowie für die einschlägigen Netzbetreiber, wie etwa Kosten- und Ressourcenersparniss betreffend das Endgerät, dessen Nutzung und die Netzwerkausrüstung.

Zusammenfassend betrifft die Erfindung also ein Kommunikationssystem und ein Kommunikationsverfahren, bei dem Kommunikationsmerkmale einer ersten Kommunikationsfunktion (z.B. QoS-Anwendung) vermittels einer Betriebseinrichtung (Datenflussklassifizierer) erfasst und Kommunikationsparametern der ersten Kommunikationsfunktion zugeordnet werden. Aus dieser Zuordnung werden vorzugsweise vermittels einer Lerneinrichtung Klassfikationsdaten für einen Klassifizierer ermittelt, so dass einer zweiten Kommunikationsfunktion (z.B. Nicht-QoS-Anwendung), deren Kommunikationsmerkmale ebenfalls erfasst werden, abhängig von den gelernten Daten der ersten Kommunikationsfunktion optimierte Kommunikationsparameter zugewiesen werden können.

## Patentansprüche

1. Kommunikationssystem zur Datenkommunikation über wenigstens ein verfügbares Kommunikationsnetz (15, 17, 16, 22; 15, 17, 18, 22; 20, 28; 15a, 17a, 18a, 22; 15a, 17a, 16a, 22; 20a, 28; 22, 26, 28), umfassend:
- wenigstens eine Kommunikationsschnittstelle (54), über die der Datenkommunikation zugrunde liegende Sendedaten zu einer Gegen-Kommunikationsschnittstelle (22; 24; 30; 32; 34; 35) wenigstens eines zugeordneten Kommunikationsnetzes übertragbar und von der Gegen-Kommunikationsschnittstelle (22; 24; 30; 32; 34; 35) der Datenkommunikation zugrunde liegende Empfangsdaten empfangbar sind;
- eine Betriebseinrichtung (58, 60), die dafür ausgeführt oder programmiert ist, die Kommunikationsschnittstelle (54) anzusteuern und eine Mehrzahl von Kommunikationsfunktionen (71, 73) auf Basis entsprechender Funktionalitäten (56) der Betriebseinrichtung oder auf Basis vermittels der Betriebseinrichtung betreibbarer Anwendungen (62, 64, 66, 68) bereitzustellen und vermittels der Kommunikationsschnittstelle (54) den Kommunikationsfunktionen jeweils zugeordnete Datenkommunikation über das Kommunikationsnetz (15, 17, 16, 22; 15, 17, 18, 22; 20, 28; 15a, 17a, 18a, 22; 15a, 17a, 16a, 22; 20a, 28; 22, 26, 28) oder ein jeweiliges Kommunikationsnetz (15, 17, 16, 22; 15, 17, 18, 22; 20, 28; 15a, 17a, 18a, 22; 15a, 17a, 16a, 22; 20a, 28; 22, 26, 28)zu ermöglichen;
wobei die Betriebseinrichtung (58, 60) dafür ausgeführt oder programmiert ist, ersten Kommunikationsfunktionen (71) die Datenkommunikation vermittels der Kommunikationsschnittstelle (54) oder einer von mehreren Kommunikationsschnittstellen gemäß wenigstens einem von der jeweiligen Kommunikationsfunktion vorgegebenen Kommunikationsparameter oder gemäß einer mehrere Kommunikationsparameter beinhaltenden Kommunikationscharakteristik zu ermöglichen und zweiten Kommunikationsfunktionen (73) ohne Kommunikationsparameter- oder Kommunikationscharakteristik-Vorgabe durch die jeweilige Kommunikationsfunktion selbst die Datenkommunikation vermittels der Kommunikationsschnittstelle (54) oder einer von mehreren Kommunikationsschnittstellen gemäß wenigstens einem von der Betriebseinrichtung vorgegebenen Kommunikationsparameter oder gemäß einer von der Betriebseinrichtung (58, 60) vorgegebenen, mehrere Kommunikationsparameter beinhaltenden Kommunikationscharakteristik zu ermöglichen;
**dadurch gekennzeichnet,**
**dass** die Betriebseinrichtung (58, 60) dafür ausgeführt oder programmiert ist, für erste Kommunikationsfunktionen (71) sich im Zuge der Datenkommunikation ergebende Kommunikationsmerkmale oder Kommunikationsmerkmalssätze zu erfassen und jeweiligen Kommunikationsparametern oder Kommunikationscharakteristiken, die von den Kommunikationsfunktionen (71) vorgegeben sind, zuzuordnen und diese Zuordnungen durch Zuordnungsdaten zu repräsentieren; und
**dass** die Betriebseinrichtung (58, 60) dafür ausgeführt oder programmiert ist, für zweite Kommunikationsfunktionen (73) sich im Zuge der Datenkommunikation ergebende Kommunikationsmerkmale oder Kommunikationsmerkmalssätze zu erfassen und auf Grundlage dieser Kommunikationsmerkmale oder Kommunikationsmerkmalssätze sowie der Zuordnungsdaten diesen zweiten Kommunikationsfunktionen (73) jeweils wenigstens einen Kommunikationsparameter oder eine mehrere Kommunikationsparameter beinhaltende Kommunikationscharakteristik zuzuordnen und die Datenkommunikation vermittels der Kommunikationsschnittstelle (54) oder einer von mehreren Kommunikationsschnittstellen gemäß dem jeweils zugeordneten wenigstens einen Kommunikationsparameter bzw. gemäß der jeweils zugeordneten Kommunikationscharakteristik zu ermöglichen.

2. Kommunikationssystem nach Anspruch 1, **dadurch gekennzeichnet, dass** die Betriebseinrichtung (56, 60) eine Lerneinrichtung (76) aufweist, die dafür ausgeführt oder programmiert ist, die Zuordnungsdaten nach einem Lernmodell oder Lernalgorithmus auszuwerten und hieraus Klassifizierungsdaten (78) zu generieren, die einem für eine jeweilige zweite Kommunikationsfunktion (73) erfassten wenigstens einen Kommunikationsmerkmal bzw. Kommunikationsmerkmalssatz wenigstens eine(n) durch die Klassifizierungsdaten vorgegebene(n) bestimmte(n) Kommunikationsparameter bzw. Kommunikationscharakteristik zuordnen, ggf. unter Berücksichtigung von Verfügbarkeitsdaten.

3. Kommunikationssystem nach Anspruch 1 oder 2, **dadurch gekennzeichnet, dass** die Betriebseinrichtung (58, 60) dafür ausgeführt oder programmiert, eine anfängliche Vorgabe wenigstens eines Kommunikationsparameters bzw. einer Kommunikationscharakteristik für eine jeweilige zweite Kommunikationsfunktion (73) durch eine Kommunikationsparameter-Zuordnung bzw. Kommunikationscharakteristik-Zuordnung auf Grundlage der Zuordnungsdaten bzw. der Klassifizierungsdaten abzulösen, und zwar für Folgeaufrufe der betreffenden zweiten Kommunikationsfunktion oder - vorzugsweise - im laufenden Betrieb, wenn die betreffende zweite Kommunikationsfunktion aktiv ist, durch Umstellung der Datenkommunikation auf die Datenkommunikation gemäß dem zugeordneten wenigstens einen Kommunikationsparameter bzw. gemäß der zugeordneten Kommunikationscharakteristik.

4. Kommunikationssystem nach einem der Ansprüche 1 bis 3, **dadurch gekennzeichnet, dass** die Betriebseinrichtung (58, 60) dafür ausgeführt oder programmiert ist, einer jeweiligen zweiten Kommunikationsfunktion (73), der momentan wenigstens ein Kommunikationsparameter bzw. eine Kommunikationscharakteristik auf Grundlage der Zuordnungsdaten bzw. der Klassifizierungsdaten zugeordnet ist, auf Grundlage geänderter oder ergänzter Zuordnungsdaten bzw. Klassifizierungsdaten oder/und auf Grundlage wenigstens eines zusätzlich oder geändert erfassten Kommunikationsmerkmals oder/und zur Berücksichtigung geänderter Verfügbarkeitsdaten wenigstens einen Kommunikationsparameter bzw. eine Kommunikationscharakteristik neu zuzuordnen, und zwar für Folgeaufrufe der betreffenden zweiten Kommunikationsfunktion oder - vorzugsweise - im laufenden Betrieb, wenn die betreffende zweite Kommunikationsfunktion aktiv ist, durch Umstellung der Datenkommunikation auf die Datenkommunikation gemäß dem neu zugeordneten wenigstens einen Kommunikationsparameter bzw. gemäß der neu zugeordneten Kommunikationscharakteristik.

5. Kommunikationssystem nach einem der Ansprüche 1 bis 4, **dadurch gekennzeichnet, dass** die Betriebseinrichtung (58, 60) dafür ausgeführt oder programmiert ist, erste Kommunikationsfunktionen (71), die auf Grundlage der Zuordnungsdaten bzw. Klassifizierungsdaten betreffend ihre Kommunikationsmerkmale oder Kommunikationsmerkmalssätze einerseits und dem vorgegebenen wenigstens einen Kommunikationsparameter bzw. der vorgegebenen Kommunikationcharakteristik andererseits nicht wenigstens einem vorgegebenen Kriterium entsprechen, als zweite Kommunikationsfunktionen (73) zu behandeln.

6. Kommunikationsverfahren zur Datenkommunikation über wenigstens ein verfügbares Kommunikationsnetz (15, 17, 16, 22; 15, 17, 18, 22; 20, 28; 15a, 17a, 18a, 22; 15a, 17a, 16a, 22; 20a, 28; 22, 26, 28), unter Nutzung wenigstens einer Kommunikationsschnittstelle (54) eines eine programmierte oder/und hardwaremäßig realisierte Betriebseinrichtung (58) aufweisenden Kommunikationssystems (40), über die der Datenkommunikation zugrunde liegende Sendedaten zu einer Gegen-Kommunikationsschnittstelle (22; 24; 30; 32; 34; 35) wenigstens eines zugeordneten Kommunikationsnetzes übertragbar und von der Gegen-Kommunikationsschnittstelle (22; 24; 30; 32; 34; 35) der Datenkommunikation zugrunde liegende Empfangsdaten empfangbar sind, umfassend:
- Vorsehen einer Mehrzahl von Kommunikationsfunktionen (71, 73) auf Basis entsprechender Funktionalitäten der Betriebseinrichtung des Kommunikationssystems oder auf Basis vermittels der Betriebseinrichtung (58) betreibbarer Anwendungen (62, 64, 66, 68), wobei die Kommunikationsfunktionen vermittels der Kommunikationsschnittstelle jeweils zugeordnete Datenkommunikation über das Kommunikationsnetz oder ein jeweiliges Kommunikationsnetz durchführen können;
- Vorsehen, dass erste Kommunikationsfunktionen (71) die Datenkommunikation vermittels der Kommunikationsschnittstelle (54) oder einer von mehreren Kommunikationsschnittstellen gemäß wenigstens einem von der jeweiligen Kommunikationsfunktion vorgegebenen Kommunikationsparameter oder gemäß einer mehrere Kommunikationsparameter beinhaltenden Kommunikationscharakteristik durchführen und zweite Kommunikationsfunktionen (73) ohne Kommunikationsparameter- oder Kommunikationscharakteristik-Vorgabe durch die jeweilige Kommunikationsfunktion selbst die Datenkommunikation vermittels der Kommunikationsschnittstelle (54) oder einer von mehreren Kommunikationsschnittstellen gemäß wenigstens einem anderweitig vorgegebenen Kommunikationsparameter oder gemäß einer anderweitig vorgegebenen, mehrere Kommunikationsparameter beinhaltenden Kommunikationscharakteristik zu ermöglichen;
**dadurch gekennzeichnet,**
**dass** für erste Kommunikationsfunktionen (71) sich im Zuge der Datenkommunikation ergebende Kommunikationsmerkmale oder Kommunikationsmerkmalssätze erfasst werden und jeweiligen Kommunikationsparametern oder Kommunikationscharakteristiken, die von den Kommunikationsfunktionen vorgegeben sind, zugeordnet werden und diese Zuordnungen durch Zuordnungsdaten repräsentiert werden; und
**dass** für zweite Kommunikationsfunktionen (73) sich im Zuge der Datenkommunikation ergebende Kommunikationsmerkmale oder Kommunikationsmerkmalssätze erfasst werden und auf Grundlage dieser Kommunikationsmerkmale oder Kommunikationsmerkmalssätze sowie der Zuordnungsdaten diesen zweiten Kommunikationsfunktionen (73) jeweils wenigstens ein Kommunikationsparameter oder eine mehrere Kommunikationsparameter beinhaltende Kommunikationscharakteristik zugeordnet werden und die Datenkommunikation vermittels der Kommunikationsschnittstelle (54) oder einer von mehreren Kommunikationsschnittstellen gemäß dem jeweils zugeordneten wenigstens einen Kommunikationsparameter bzw. gemäß der jeweils zugeordneten Kommunikationscharakteristik durchgeführt wird. '

7. Kommunikationsverfahren nach Anspruch 6, **dadurch gekennzeichnet, dass** die Zuordnungsdaten nach einem Lernmodell oder Lernalgorithmus ausgewertet werden und hieraus Klassifizierungsdaten generiert werden, die einem für eine jeweilige zweite Kommunikationsfunktion erfassten wenigstens einen Kommunikationsmerkmal bzw. Kommunikationsmerkmalssatz wenigstens eine(n) durch die Klassifizierungsdaten vorgegebene(n) bestimmte(n) Kommunikationsparameter bzw. Kommunikationscharakteristik zuordnen, ggf. unter Berücksichtigung von Verfügbarkeitsdaten.

8. Kommunikationsverfahren nach Anspruch 6 oder 7, **dadurch gekennzeichnet, dass** eine anfängliche Vorgabe wenigstens eines Kommunikationsparameters bzw. einer Kommunikationscharakteristik für eine jeweilige zweite Kommunikationsfunktion (73) durch eine Vorgabe entsprechend der Zuordnung auf Grundlage der Zuordnungsdaten bzw. der Klassifizierungsdaten abgelöst wird, und zwar für Folgeaufrufe der betreffenden zweiten Kommunikationsfunktion oder - vorzugsweise - im laufenden Betrieb, wenn die betreffende zweite Kommunikationsfunktion (73) aktiv ist, durch Umstellen der Datenkommunikation auf die Datenkommunikation gemäß dem zugeordneten wenigstens einen Kommunikationsparameter bzw. gemäß der zugeordneten Kommunikationscharakteristik.

9. Kommunikationsverfahren nach einem der Ansprüche 6 bis 8, **dadurch gekennzeichnet, dass** einer jeweiligen zweiten Kommunikationsfunktion (73), der momentan wenigstens ein Kommunikationsparameter bzw. eine Kommunikationscharakteristik auf Grundlage der Zuordnungsdaten bzw. der Klassifizierungsdaten zugeordnet ist, auf Grundlage geänderter oder ergänzter Zuordnungsdaten bzw. Klassifizierungsdaten oder/und auf Grundlage wenigstens eines zusätzlich oder geändert erfassten Kommunikationsmerkmals oder/und zur Berücksichtigung geänderter Verfügbarkeitsdaten wenigstens ein Kommunikationsparameter bzw. eine Kommunikationscharakteristik neu zugeordnet wird, und zwar für Folgeaufrufe der betreffenden zweiten Kommunikationsfunktion (73) oder - vorzugsweise - im laufenden Betrieb, wenn die betreffende zweite Kommunikationsfunktion (73) aktiv ist, durch Umstellen der Datenkommunikation auf die Datenkommunikation gemäß dem neu zugeordneten wenigstens einen Kommunikationsparameter bzw. gemäß der neu zugeordneten Kommunikationscharakteristik.

10. Kommunikationsverfahren nach einem der Ansprüche 6 bis 9, **dadurch gekennzeichnet, dass** erste Kommunikationsfunktionen (71), die auf Grundlage der Zuordnungsdaten bzw. Klassifizierungsdaten betreffend ihre Kommunikationsmerkmale oder Kommunikationsmerkmalssätze einerseits und dem vorgegebenen wenigstens einen Kommunikationsparameter bzw. der vorgegebenen Kommunikationscharakteristik andererseits nicht wenigstens einem vorgegebenen Kriterium entsprechen, als zweite Kommunikationsfunktionen (73) behandelt werden.

## Claims

1. A communication system for data communication over at least one available communication network (15, 17, 16, 22; 15, 17, 18, 22; 20, 28; 15a, 17a, 18a, 22; 15a, 17a, 16a, 22; 20a, 28; 22, 26, 28), comprising:
- at least one communication interface (54) via which underlying transmission data of the data communication are transmittable to an opposing communication interface (22; 24; 30; 32; 34; 35) of at least one allocated communication network, and underlying reception data of the data communication are receivable by the opposing interface (22; 24; 30; 32; 34; 35);
- an operating device (58, 60) which is constructed or programmed to drive the communication interface (54) and provide a plurality of communication functions (71, 73) on the basis of corresponding functionalities (56) of the operating device or on the basis of applications (62, 64, 66, 68) that can be run by means of the operating device and to enable the data communication respectively allocated to the communication functions to occur over the communication network (15, 17, 16, 22; 15, 17, 18, 22; 20, 28; 15a, 17a, 18a, 22; 15a, 17a, 16a, 22; 20a, 28; 22, 26, 28) or a respective communication network (15, 17, 16, 22; 15, 17, 18, 22; 20, 28; 15a, 17a, 18a, 22; 15a, 17a, 16a, 22; 20a, 28; 22, 26, 28) by means of the communication interface (54);
the operating device (58, 60) being constructed or programmed to enable first communication functions (71) to execute the data communication by means of the communication interface (54) or one of several communication interfaces in accordance with at least one communication parameter prescribed by that communication function or in accordance with a communication characteristic containing several communication parameters and to enable second communication functions (73) to execute the data communication by means of the communication interface (54) or one of several communication interfaces in accordance with at least one communication parameter prescribed by the operating device or in accordance with a communication characteristic containing several communication parameters that is prescribed by the operating device (58, 60), without the communication function itself prescribing any communication parameters or a communication characteristic; **characterized in that**
the operating device (58, 60) is constructed or programmed in such a way that for first communication functions (71) it detects communication features or sets of communication features emerging in the course of the data communication and assigns them to respective communication parameters or communication characteristics prescribed by the communication functions (71) and represents those assignments by allocation data; and
the operating device (58, 60) is constructed or programmed in such a way that for second communication functions (73) it detects communication features or sets of communication features emerging in the course of the data communication and, on the basis of those communication features or sets of communication features and the allocation data, assigns each of the second communication functions (73) at least one communication parameter or one communication characteristic containing several communication parameters, and enables the data communication by means of the communication interface (54) or one of several communication interfaces according to the at least one communication parameter or the communication characteristic respectively assigned.

2. The communication system according to claim 1, **characterized in that** the operating device (56, 60) comprises a learning device (76) which is constructed or programmed to evaluate allocation data according to a learning model or learning algorithm and generate classification data (78) therefrom, which allocate at least one specific communication parameter or a communication characteristic which is defined by the classification data to at least one communication feature or set of communication features which is detected for each second communication function (73), potentially allocating it in consideration of availability data.

3. The communication system according to claim 1 or 2, **characterized in that** the operating device (58, 60) is constructed or programmed to clear an initial prescription of at least one communication parameter or communication characteristic for a second communication function (73) by assigning a communication parameter or communication characteristic on the basis of the allocation data or, more precisely, the classification data, namely for subsequent call-ups of the second communication function concerned or - preferably - in mid-operation when the second communication function is active by converting the data communication to the data communication according to the at least one assigned communication parameter or according to the assigned communication characteristic.

4. The communication system according to one of the claims 1 to 3, **characterized in that** the operating device (58, 60) is constructed or programmed to reassign at least one communication parameter or a communication characteristic, as the case may be, to a second communication function (73) to which at least one communication parameter or communication characteristic has already been assigned on the basis of the allocation data or, more precisely, the classification data, given a change or addition to the allocation data or classification data and/or changes or additions to the at least one communication feature detected and/or to account for changes in availability data; namely for subsequent call-ups of the second communication function concerned or - preferably - in mid-operation when the second communication function is active by converting the data communication to the data communication according to the at least one reassigned communication parameter or according to the reassigned communication characteristic.

5. The communication system according to one of the claims 1 to 4, **characterized in that** the operating device (58, 60) is constructed or programmed to treat first communication functions (71) as second communication functions (73) if on the basis of the allocation data or, more precisely, the classification data, the first communication functions do not meet at least one prescribed criterion both with respect to their communication features or sets of communication features and with respect to the at least one communication parameter prescribed or, as the case may be, the communication characteristic prescribed.

6. A method for data communication over at least one available communication network (15, 17, 16, 22; 15, 17, 18, 22; 20, 28; 15a, 17a, 18a, 22; 15a, 17a, 16a, 22; 20a, 28; 22, 26, 28) using at least one communication interface (54) of a communication system (40) comprising an operating device (58) that is realized as software and/or hardware, the underlying transmission data of the data communication being transmittable to an opposing communication interface (22; 24; 30; 32; 34; 35) of at least one allocated communication network, and underlying reception data of the data communication being receivable by the opposing communication interface (22; 24; 30; 32; 34; 35), comprising:
- providing a plurality of communication functions (71, 73) on the basis of corresponding functionalities of the operating device of the communication system or on the basis of applications (62, 64, 66, 68) that can be run by the operating device (58), whereby the communication functions can execute the data communication assigned in each case over the communication network or a respective communication network by means of the communication interface;
- providing that first communication functions (71) execute the data communication by means of the communication interface (54) or one of several communication interfaces in accordance with at least one communication parameter that is prescribed by the respective communication function or in accordance with a communication characteristic that includes several communication parameters, and enabling to second communication functions (73) the data communication by means of the communication interface (54) or one of several communication interfaces in accordance with at least one communication parameter that is prescribed elsewhere or in accordance with a communication characteristic containing several communication parameters which is prescribed elsewhere, without communication parameters or communication characteristics being prescribed by the respective communication function itself;
**characterized in that**
for first communication functions (71), communication features or sets of communication features emerging in the course of the data communication are detected and assigned to respective communication parameters or communication characteristics that are prescribed by the communication functions, and those assignments are represented by means of allocation data; and
for second communication functions (73) communication features or sets of communication features emerging in the course of data communication are detected and, on the basis of those communication features or sets of features and the allocation data, each of the second communication functions (73) is assigned at least one communication parameter or one communication characteristic containing several communication parameters, and the data communication is executed by means of the communication interface (54) or one of several communication interfaces according to the at least one communication parameter or the communication characteristic respectively assigned.

7. The communication method according to claim 6, **characterized in that** the allocation data are evaluated according to a learning model or learning algorithm, and classification data are generated therefrom, which allocate at least one specific communication parameter or communication characteristic which is prescribed by the classification data to at least one communication feature or set of communication features which is detected for each second communication function, respectively, potentially allocating it in consideration of the availability data.

8. The communication method according to claim 6 or 7, **characterized in that** an initial prescription of at least one communication parameter or communication characteristic for a respective second communication function (73) is cleared by the prescription of another according to an allocation on the basis of the allocation data or, more precisely, the classification data, namely for subsequent call-ups of the second communication function concerned or - preferably - in mid-operation when the second communication function (73) is active by converting the data communication to the data communication according to the at least one assigned communication parameter or according to the assigned communication characteristic.

9. The communication method according to one of the claims 6 to 8, **characterized in that** a second communication function (73) to which at least one communication parameter or communication characteristic has already been assigned on the basis of the allocation data or, more precisely, the classification data is reassigned at least one communication parameter or a communication characteristic, as the case may be, given a change or addition to the allocation data or classification data and/or additions or changes to the at least one communication feature detected and/or to account for changes in availability data; namely for subsequent call-ups of the second communication function (73) concerned or - preferably - in mid-operation when the second communication function (73) is active by converting the data communication to the data communication according to the at least one reassigned communication parameter or according to the reassigned communication characteristic.

10. The communication method according to one of the claims 6 to 9, **characterized in that** first communication functions (71) are treated as second communication functions (73) if on the basis of the allocation data or, more precisely, the classification data the first communication functions do not meet at least one prescribed criterion, both with respect to their communication features or sets of communication features and with respect to the at least one communication parameter prescribed or, as the case may be, the communication characteristic prescribed.

## Revendications

1. Système de communication pour la communication de données via au moins un réseau de communication (15, 17, 16, 22; 15, 17, 18, 22; 20, 28; 15a, 17a, 18a, 22; 15a, 17a, 16a, 22; 20a, 28; 22, 26, 28), comprenant:
- au moins une interface de communication (54) via laquelle des données de transmission sous-jacentes de la communication de données sont transmissibles à une interface de communication opposante (22; 24; 30; 32; 34; 35) d'au moins un réseau de communication alloué, et des données de réception sous-jacentes de la communication de données sont recevables par l'interface opposante (22; 24; 30; 32; 34; 35);
- un dispositif d'opération (58, 60) qui est construit ou programmé à commander l'interface de communication (54) et fournir une pluralité de fonctions de communication (71, 73) sur la base de fonctionnalités correspondantes (56) du dispositif d'opération ou sur la base d'applications (62, 64, 66, 68) qui peuvent être opérées par le dispositif d'opération et à permettre la communication de données respectivement allouée aux fonctions de communication à se passer via le réseau de communication (15, 17, 16, 22; 15, 17, 18, 22; 20, 28;15a, 17a, 18a, 22; 15a, 17a, 16a, 22; 20a, 28, 22, 26, 28) ou un réseau de communication respectif (15, 17, 16, 22; 15, 17, 18, 22; 20, 28; 15a, 17a, 18a, 22; 15a, 17a, 16a, 22; 20a, 28, 22, 26, 28) par l'interface de communication (54);
le dispositif d'opération (58, 60) étant construit ou programmé à permettre à des premières fonctions de communication (71) à exécuter la communication de données par l'interface de communication (54) ou une de plusieurs interfaces de communication selon au moins un paramètre de communication prescrit par cette fonction de communication ou selon une caractéristique de communication contenant plusieurs paramètres de communication et à permettre à des deuxièmes fonctions de communication (73) à exécuter la communication de données par l'interface de communication (54) ou une de plusieurs interfaces de communication selon au moins un paramètre de communication prescrit par le dispositif d'opération ou selon une caractéristique de communication contenant plusieurs paramètres de communication prescrite par le dispositif d'opération (58, 60) sans que la fonction de communication soi-même prescrive des paramètres de communication ou une caractéristique de communication;
**caractérisé en ce que**
le dispositif d'opération (58, 60) est construit ou programmé de la manière que, pour des premières fonctions de communication (71), il détecte des critères de communication ou des sets de critères émergant au cours de la communication de données et les assigne à des paramètres de communication respectifs ou des caractéristiques prescrites par les fonctions de communication (71) et représente ces assignations par des données d'allocation; et
le dispositif d'opération (58, 60) étant construit ou programmé de la manière que, pour des deuxièmes fonctions de communication (73), il détecte des critères de communication ou des sets de critères de communication émergant au cours de la communication de données et, sur la base de ces critères de communication ou des sets de critères de communication et des données d'allocation, il assigne à chacun des deuxièmes fonctions de communication (73) à au moins un paramètre de communication ou une caractéristique de communication contenant plusieurs paramètres de communication, et permet la communication de données par l'interface de communication (54) ou une de plusieurs interfaces de communication selon l'au moins un paramètre de communication ou la caractéristique de communication assignée respectivement.

2. Système de communication selon la revendication 1, **caractérisé en ce que** le dispositif d'opération (56, 60) comprend un dispositif d'apprentissage (76) qui est construit ou programmé de la manière à évaluer des données d'allocation selon un modèle d'apprentissage ou un algorithme d'apprentissage et à en générer des données de classification (78), qui allouent au moins un paramètre de communication spécifique ou une caractéristique de communication qui est définie par les données de classification à au moins une critère de communication ou set de critère de communication qui est détectée pour chaque deuxième fonction de communication (73), le cas échéant en considération de données de disponibilité.

3. Système de communication selon la revendication 1 ou 2, **caractérisé en ce que** le dispositif d'opération (58, 60) est construit ou programmé de la manière à remplacer une prescription initiale d'au moins un paramètre de communication ou caractéristique de communication pour une deuxième fonction de communication (73) par une assignation d'un paramètre de communication ou d'un caractéristique de communication sur la base des données d'allocation ou, plus précisément, des données de classification, à savoir pour des appels subséquents de la deuxième fonction de communication concernée ou - de préférence - au milieu de l'opération quand la deuxième fonction de communication est active par la conversion de la communication de données en la communication de données selon l'au moins un paramètre de communication ou selon la caractéristique de communication assignée.

4. Système de communication selon l'une des revendication 1 à 3, **caractérisé en ce que** le dispositif d'opération (58, 60) est construit ou programmé de la manière à réassigner au moins un paramètre de communication ou plutôt caractéristique de communication à une deuxième fonction de communication (73) auquel au moins un paramètre de communication ou caractéristique de communication a déjà été assigné sur la base des données d'allocation ou, plus précisément, les données de classification, sur la base d'un changement ou addition aux données d'allocation ou des données de classification et/ou des changements ou des additions au moins une caractéristique détectée et/ou considérer des changements dans des données de disponibilité; a savoir pour des appels subséquents de la deuxième fonction de communication concernée ou - de préférence - au milieu de l'opération quand la deuxième fonction de communication est active par la conversion de la communication de données à la communication de données selon l'au moins paramètre de communication réassigné ou selon la caractéristique de communication réassignée.

5. Système de communication selon l'une des revendications 1 à 4, **caractérisé en ce que** le dispositif d'opération (58, 60) est construit ou programmé de la manière à traiter des premières fonctions de communication (71) comme des deuxièmes fonctions de communication (73), si sur la base des données d'allocation ou, plus précisément, des données de classification, les premières fonctions de communication ne satisfont pas au moins une critère prescrite concernant l'au moins paramètre de communication prescrit ou plutôt la caractéristique de communication prescrite.

6. Procédé de communication de données via au moins un réseau de communication disponible (15, 17, 16, 22; 15, 17, 18, 22; 20, 28; 15a, 17a, 18a, 22; 15a, 17a, 16a, 22; 20a, 28; 22, 26, 28) en utilisant au moins une interface de communication (54) d'un système de communication (40) comprenant un dispositif d'opération (58) réalisé comme logiciel et/ou matériel, les données de transmission sous-jacentes de la communication de données étant transmissibles à une interface de communication (22; 24; 30; 32; 34; 35) d'au moins un réseau de communication alloué, et des données de réception sous-jacentes de la communication de données étant recevables par l'interface de communication opposante (22; 24; 30; 32; 34; 35), comprenant:
- prévoir une pluralité de fonctions de communication (71, 73) sur la base de fonctionnalités correspondantes du dispositif d'opération du système de communication ou sur la base d'applications (62, 64, 66, 68) qui peuvent être opérées par le dispositif d'opération (58), les fonctions de communication pouvant exécuter la communication de données assignée dans chaque cas via le réseau de communication ou un réseau de communication respectif par l'interface de communication;
- prévoir que des premières fonctions de communication (71) exécutent la communication de données par l'interface de communication (54) ou une de plusieurs interfaces de communication selon au moins un paramètre de communication prescrit par la fonction de communication respective ou selon une caractéristique de communication incluant plusieurs paramètres de communication, et permettre à des deuxièmes fonctions de communication (73) la communication de données par l'interface de communication (54) ou une de plusieurs interfaces de communication selon au moins un paramètre de communication prescrit ailleurs ou selon une caractéristique de communication contenant plusieurs paramètres de communication prescrite ailleurs, sans que des paramètres de communication ou des caractéristiques de communication étant prescrits par la fonction de communication respective soi-même;
**caractérisé en ce que**
pour des premières fonctions de communication (71), des caractéristiques de communication ou des sets de caractéristiques de communication émergant au cours de la communication de données sont détectées et assignées aux paramètres de communication respectifs ou des caractéristiques de communication prescrites par les fonctions de communication, et ces assignations sont représentées par des données d'allocation; et
pour des fonctions de communication (73), des caractéristiques de communication ou des sets de caractéristiques de communication émergant au cours de la communication de données sont détectées et, sur la base de ces caractéristiques de communication ou sets de caractéristiques et les données d'allocation, chacune des deuxièmes fonctions de communication (73) est assignée à au moins un paramètre de communication ou une caractéristique de communication contenant des paramètres de communication, et la communication de données est exécutée par l'interface de communication (54) ou une de plusieurs interfaces de communication selon l'au moins un paramètre de communication ou caractéristique de communication respectivement assignés.

7. Procédé de communication selon la revendication 6, **caractérisé en ce que** les données d'allocation sont évaluées selon un modèle d'apprentissage ou un algorithme d'apprentissage, et des données de classification en sont générées, qui allouent au moins un paramètre de communication spécifique ou caractéristique de communication qui est prescrite par les données de classification à au moins une critère de communication ou set de critère de communication qui est détecté pour chaque deuxième fonction de communication, respectivement, le cas échéant en considération de données de disponibilité.

8. Procédé de communication selon la revendication 6 ou 7, **caractérisé en ce que** la prescription initiale d'au moins un paramètre de communication ou caractéristique de communication pour une deuxième fonction de communication respective (73) est remplacée par une prescription selon l'allocation sur la base des données d'allocation ou, plus précisément, des données de classification, à savoir pour des appels subséquents de la deuxième fonction de communication concernée ou - de préférence - au milieu de l'opération quand la deuxième fonction de communication (73) est active par la conversion de la communication de données en communication de données selon l'au moins un paramètre de communication assigné ou selon la caractéristique de communication assignée.

9. Procédé de communication selon l'une des revendications 6 à 8, **caractérisé en ce qu'**une deuxième fonction de communication (73) auquel au moins un paramètre de communication ou caractéristique de communication a déjà été assigné sur la base des données d'allocation ou, plus précisément, des données de classification est réassignée au moins un paramètre de communication ou plutôt une caractéristique de communication, sur la base d'un changement ou d'une addition aux données d'allocation ou des données de classification et/ou des additions ou des changements à l'au moins une critère de communication détectée et/ou pour considérer des changements dans des données de disponibilité; à savoir pour des appels subséquents de la deuxième fonction de communication concernée (73) ou - de préférence - au milieu de l'opération quand la deuxième fonction de communication (73) est active par la conversion de la communication de données en la communication de données selon l'au moins un paramètre de communication ou selon la caractéristique de communication réassignée.

10. Procédé de communication selon l'une des revendications 6 à 9, **caractérisé en ce que** les premières fonctions de communication (71) sont traitées comme des deuxièmes fonctions de communication (73) si sur la base des données d'allocation ou, plus précisément, des données de classification les premières fonctions de communication ne satisfont pas au moins une critère prescrite, concernant leurs caractéristiques de communication ou des sets de caractéristiques de communication ou concernant l'au moins un paramètre de communication prescrit ou plutôt la caractéristique de communication prescrite.
